# EUROPEAN PATENT SPECIFICATION

(11) **EP 1 257 107 B1**
(45) Date of publication and mention of the grant of the patent: **21.03.2007**
(21) Application number: 02009302.7
(22) Date of filing: 30.04.2002
(51) Int. Cl.: H04L 29/06

(54) **Two-way communicating method and system and information processing apparatus**
Verfahren und System für Zweiwegkommunikation und Informationsverarbeitungsapparat
Méthode et système de communication bi-directionnel et appareillage de traitement de l'information

(30) Priority: 08.05.2001 JP 2001137029
(43) Date of publication of application: 13.11.2002
(73) Proprietor: MATSUSHITA ELECTRIC INDUSTRIAL CO., LTD., Kadoma-shi, Osaka 571-8501 (JP)
(72) Inventor: Tanigughi, Koji, Yokohama-shi, Kanagawa 230-0024 (JP)
(74) Representative: Balsters, Robert

(56) References cited:
- WO-A-00/74338
- WO-A-01/01621
- US-A- 6 167 441

## Description

### FIELD OF THE INVENTION

This invention relates to an information processing apparatus and system and two-way communicating method to provide contents or services.

### BACKGROUND OF THE INVENTION

Conventionally, there has been such a two-way communicating method and system and information processing apparatus as described in JP-A-10-235015, for example. Fig. 23 shows a two-way communicating system described in the publication.

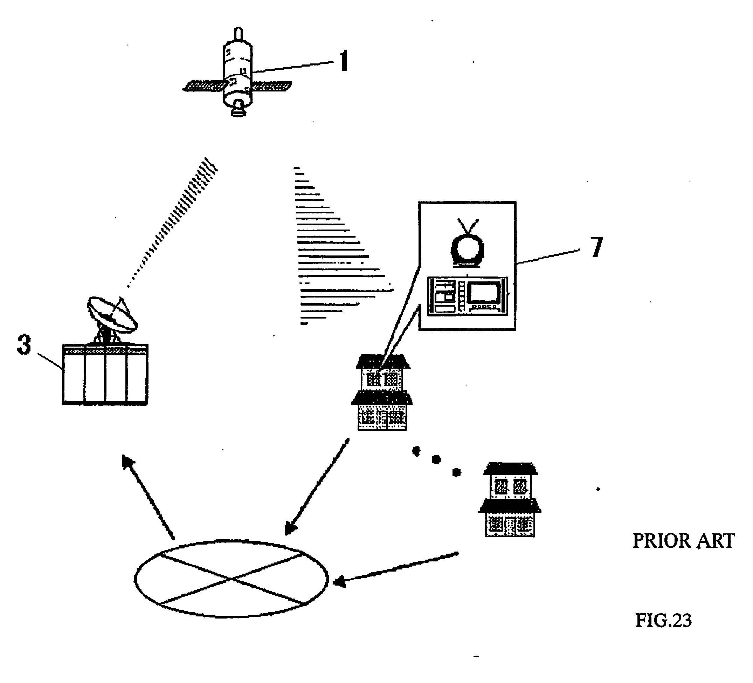

In Fig. 23, there is included a system and game terminal 7 that quiz questions are posed over to a number of terminals through a satellite data communication 1 to proceed a game concurrently. A host apparatus 3, in proper timing, transmits quiz-related information having a quiz question, correct answer and quiz progress schedule to the game terminals 7 through the satellite data communication 1. The game terminal 7 determines a necessity to report a game progress to the host apparatus 3 on the basis of the quiz progress schedule and occurrence condition of right/wrong answers on the relevant terminal. In the case requiring a report, the game terminal 7, in timing of a report, informs the host apparatus 3 of its game progress.

However, in the related-art structure, because the host apparatus transmits a quiz progress schedule together with a quiz question and correct answer, the communication between the host apparatus and the game terminal cannot be varied in timing according to a correct-answer ratio. Consequently, even where terminals to communicate be limited in the number by previous grouping, when there is variation in the number of terminals to report of the group due to a correct-answer ratio, it is impossible to adjust the timing of report freely while reflecting the variation. Thus, there has been a problem that the host apparatus be not reduced in communication load to a sufficient, effective extent.

The present invention has been made in order to resolve the foregoing problem in the related art. It is an object to provide a two-way communicating system in a one-to-multiplicity relationship, which allows transmission to the server apparatus in a dispersed fashion in timing.

The US patent US 6,167,441 discloses the use of an intercepting agent which intercepts a client's request for a file, sent to a web server, detects the client's device capability information, and redirects the client's request to a URL in order to retrieve a version of the requested file, according to the detected client device capability information.
This intercepting agent is at a web server. However, a snooping operation performed at the requesting client device can retrieve the needed client device information.

### SUMMARY OF THE INVENTION

A first information processing apparatus according to the present invention, for resolving the foregoing problem, comprises: a storage section storing a data transmission program for a computer to execute: a step of acquiring at least one of terminal information and user information on the basis of inquiry information; a step of calculating a transmitting condition on the basis of a transmission rule; and a step of instructing to transmit the acquired information to a designated information processing apparatus under the transmitting condition, and control information including inquiry information and transmission rule; a transmitting section for transmitting the data transmission program and the control information; a receiving section for receiving response data from an information processing apparatus, having executed the data transmission program, different from the present information processing apparatus; a control information setting section for updating the control information on the basis of the response data.

Meanwhile, a second information processing apparatus according to the invention comprises: a module receiving section for receiving a data transmission program; an executing section for executing the program; and a transmitting section for transmitting information acquired by the execution according to an instruction from the data transmission program.

Meanwhile, a two-way communicating system of the invention comprises the first information processing apparatus and the second information processing apparatus.

Meanwhile, an information processing apparatus of the invention comprises: a module transmitting section for transmitting a data transmission program for a computer to execute a step of acquiring at least one of terminal information and user information on the basis of a method of displaying ticket information and a reservation input form; a step of calculating a transmitting condition on the basis of a transmission rule; and a step of instructing to transmit the acquired information to a designated information processing apparatus under the transmitting condition; a circuit connecting section for connecting, where received reservation information is not acceptable, a telephone line to an information processing apparatus different from the relevant information processing apparatus as a reservation-information transmission source; an instruction accepting section for accepting an instruction from the telephone line; and a reservation changing section for changing the reservation information by the instruction.

Meanwhile, a two-way communicating method of the invention comprises: a step of distributing a data transmission program through a data broadcast to broadcast receiving terminals by a broadcast station capable of broadcasting data; a step of transmitting control information including inquiry information and transmission rule to the broadcast receiving terminals by the broadcast station through a data broadcast; and a step of transmitting response data as information the broadcast receiving terminal have acquired on the basis of the control information according to the data transmission program and the control information.

### BRIEF DESCRIPTION OF THE DRAWINGS

Fig. 1 shows a configuration diagram of a two-way communicating system in Embodiment 1 of the present invention;
Fig. 2 shows a configuration diagram of a two-way communicating system in Embodiment 2 of the invention;
Fig. 3 shows a block configuration diagram of a server apparatus in Embodiment 1 of the invention;
Fig. 4 shows a block configuration diagram of a client's terminal in Embodiment 1 of the invention;
Fig. 5 is a flowchart showing an operation of a data transmission program preparing process in Embodiment 1 of the invention;
Fig. 6 is a flowchart showing an operation of the data transmission program transmitting process in Embodiment 1 of the invention;
Fig. 7 is a flowchart showing an operation of updating a control message and transmitting process of the same in Embodiment 1 of the invention;
Fig. 8 is a flowchart showing a procedure of a module receiving process of the client's terminal in Embodiment 1 of the invention;
Fig. 9 is a flowchart showing a procedure of a data transmitting process of the client's terminal in Embodiment 1 of the invention;
Fig. 10 is a flowchart showing transmission determination and transmission time calculating method in Embodiment 1 of the invention;
Fig. 11 is a flowchart showing a procedure of a module transmitting process in Embodiment 2 of the invention;
Fig. 12 is a flowchart showing a procedure of a module receiving process in Embodiment 2 of the invention;
Fig. 13 shows a figure describing a terminal-input information list and control rule in Embodiment 1 of the invention;
Fig. 14 shows a configuration diagram of a ticket reservation system in Embodiment 3 of the invention;
Fig. 15A shows a data input form for the ticket reservation system in Embodiment 3 of the invention;
Fig. 15B shows a data input form for the ticket reservation system in Embodiment 3 of the invention;
Fig. 15C shows a data input form for the ticket reservation system in Embodiment 3 of the invention;
Fig. 15D shows a data input form for the ticket reservation system in Embodiment 3 of the invention;
Fig. 15E shows a data input form for the ticket reservation system in Embodiment 3 of the invention;
Fig. 15F shows a data input form for the ticket reservation system in Embodiment 3 of the invention;
Fig. 16 shows a figure describing a terminal-input information list and control rule in Embodiment 3 of the invention;
Fig. 17 shows a sequence diagram of a process for a audience participation program of a digital satellite broadcast in Embodiment 4;
Fig. 18 shows a figure describing a terminal-input information list and control rule in Embodiment 4 of the invention;
Fig. 19 shows a block configuration diagram of a broadcast station in Embodiment 2 of the invention;
Fig. 20 shows a block configuration diagram of a broadcast receiving terminal in Embodiment 2 of the invention;
Fig. 21 is a flowchart showing a ticket reserving process by a server apparatus in Embodiment 3 of the invention;
Fig. 22 is a flowchart showing a method of calculating a transmission time to the server apparatus in Embodiment 3 of the invention; and
Fig. 23 shows a configuration diagram of a two-way communicating system in the related art.

### DESCRIPTION OF THE PREFERRED EMBODIMENTS

Now, the present invention will be explained in detail together with the drawings.

### Embodiment 1

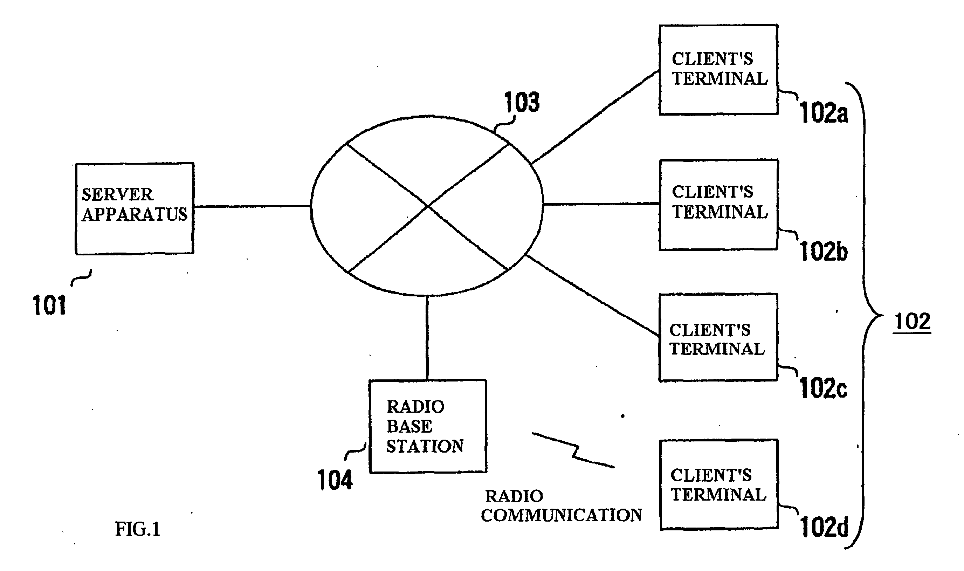

Fig. 1 is a system configuration view of a two-way communicating system in a first embodiment of the invention.

In Fig. 1, a server apparatus 101 is a Web server to manage information contents and provide/distribute contents to client's terminals. The client's terminals 102a - 102d are an arbitrary information processing apparatus, such as a personal computer, a personal digital assistance (PDA) or a cellular phone. This can receive and display an information content provided by the server apparatus 101, mutually communicate with the server apparatus and execute a program developed in a Java language or a similar language to that. A network 103 allows mutual communications between the server apparatus 101 and the client's terminal 102. This is an arbitrary network, such as a WAN (Wide Area Network), a LAN (Local Area Network), a radio network or a combination of them. Meanwhile, a radio base station 104 communicates with the client's terminal 102 having a radio network interface. Note that the client's terminals 102a - 102d, hereinafter, are collectively described as client's terminals 102.

Explanation is made on the operation and function of the two-way communicating system thus configured.

The server apparatus 101 publicizes a data transmission program on a Web site so that the client's terminal 102 is allowed to download it. The data transmission program is a module, related to the service provided by the server apparatus 101, required to execute the data transmission. This is to be executed on the client's terminal 102.

In the case where the client's terminal 102 executes a downloaded data transmission program, a data input form or data input graphical user interface (hereinafter, described "GUI") is offered on a display of the client's terminal 102. When the user enters data in the data input form, the data transmission program performs a predetermined operation on the entered data to calculate transmission time data. The transmission time data is the time data representative of a time range in which data is to be transmitted to the server apparatus 101. The operation of a time range calculation, if devised to use a random number list or so, is enabled to output random time data. This properly disperse the time of data transmissions from the client's terminals 102 toward the server apparatus 101.

Now, explanation is made in detail on the configuration and operation/function of the server apparatus 101 and client's terminal 102.

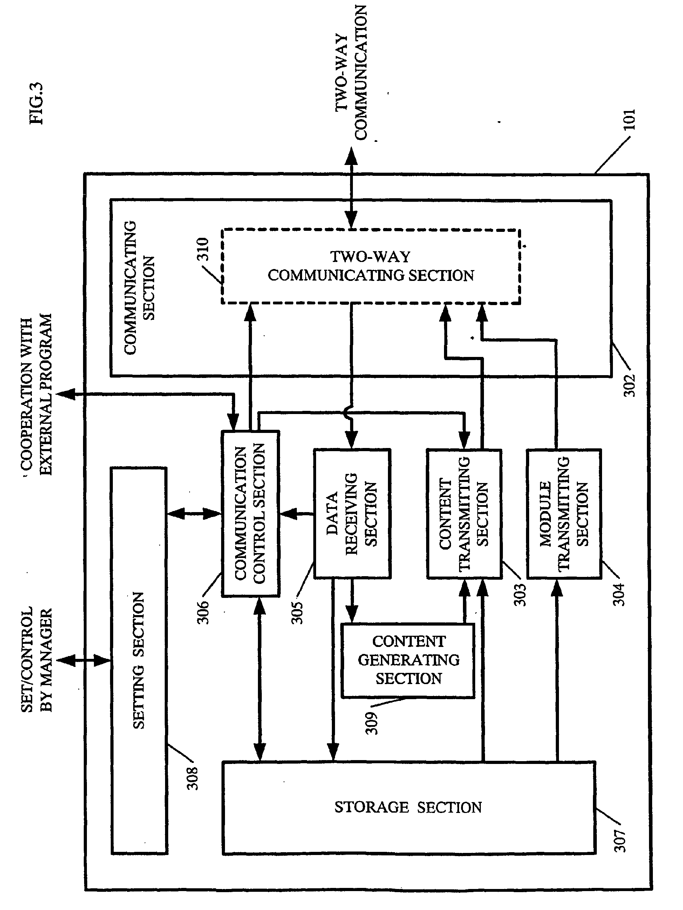

Fig. 3 is a block configuration diagram of the server apparatus 101. In the figure, the arrow represent a flow of data, the control lines being omittedly shown.

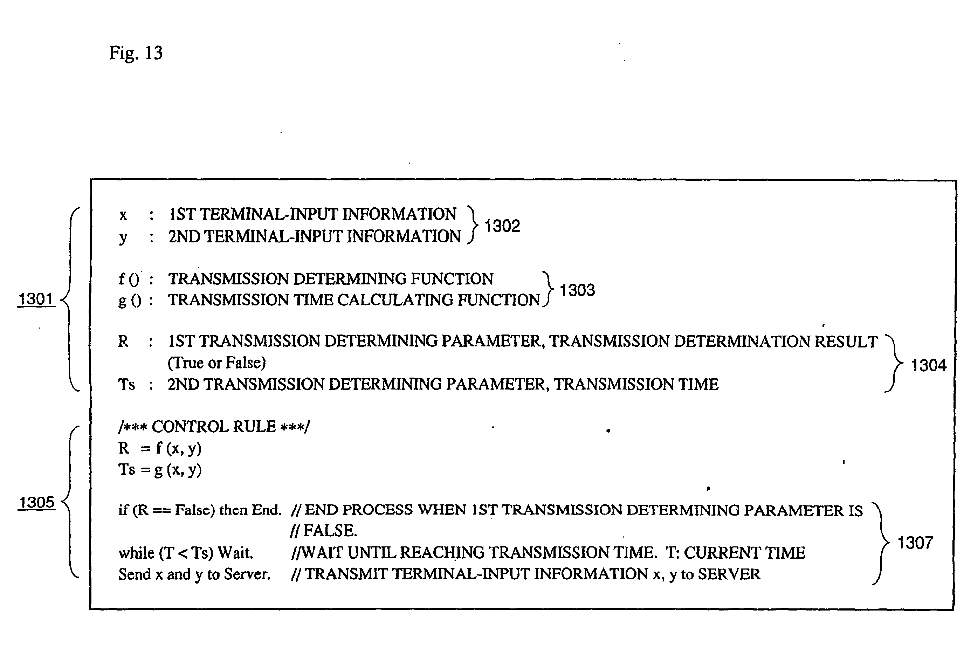

A communicating section 302 has a two-way communicating section 310 to have mutual communications with the client's terminal 102 through a network. A content transmitting section 303 provides a content described in a markup language, such as HTML (Hyper Text Markup Language) and stream data to the client's terminal 102 through the communicating section 302. A module transmitting section 304 transmits a data transmission program to the client's terminal 102. In Embodiment 1, the data transmission program is downloaded from the server apparatus 101 onto the client's terminal 102 by the use of a protocol, such as a HTTP or FTP (File Transfer Protocol). Herein, the data transmission program is a program module to be executed in the client's terminal 102, in order to control the data transmission in an upward direction, i.e. from the client's terminal 102 to the server apparatus 101. The module includes therein a terminal-input information list 1301 and control rule 1305, as shown in Fig. 13. The terminal input information list 1301 further comprises terminal-input information 1302, transmission function information 1303 and a transmission determining parameter 1304. The terminal input information 1302 is the information describing concerning the data to be externally acquired in the client's terminal unit 102. The transmission function information 1303 comprises a transmission determining function to calculate for allowing/not-allowing transmission and a transmission time calculating function to calculate a transmission time. Meanwhile, the control rule 1305 is a program describing a control way of data transmission in the upward direction. Besides these, the data transmission program possesses a program to acquire terminal input information 1301 as a script for a data input form.

A data receiving section 305 receives the data in an upward direction from the client's terminal 101 through the communicating section 302.

A communication control section 306 makes control of the communication with the client's terminal 102. This generates a control message to control the client's terminal 102, transmits a control message to the client's terminal 102 and analyzes the data received from the client's terminal 102 through the data receiving section 305. Herein, the control message is a description of a terminal input information list 1301 and control rule 1302 similar to that possessed by the data transmission program. Meanwhile, the communication control 306 has also a function to newly generate a control message on the basis of the analysis result of received data, and an interface to perform a cooperative process with external hardware or other programs.

A storage section 307 stores and manages information contents. This stores and manages the information contents to be offered to the client's terminals 102 and the received data or the like from the client's terminal 102. The storage section 307 also stores already prepared data transmission programs and control messages.

A setting section 308 provides setting in and manages the server apparatus 101, and has a GUI to be operated by a manager. This is used to input the information from the manager and display the content of received data from the client's terminal 102. The information inputted through the GUI of the setting section 308 is outputted to the communication control section 306. The communication control section 306 generates a control message on the basis of the information acquired from the setting section 308 and outputs the received information from the client's terminal 102 to the setting section 308. The information acquired from the communication control section 306 is offered to the manager through the GUI of the setting section 308.

A content generator 309 re-distributes the data received from the client's terminals 102. Namely, this is needed for the case where the data received at the data receiving section 305 is processed and supplied to the content transmitting section 303. The content generating section 309 has also a function to supply the externally acquired video and audio data to the content transmitting section 303. This function is used in the distribution of stream data and real-time two-way communication with the client's terminal 102.

A two-way communicating section 310 receives the data in the upward direction from the client's terminal 102 and outputs the received data to the communication control section 306, storage section 307 and content generating section 309 through the data receiving section 305. The two-way communicating section 310, also, delivers an information content, such as an HTML file or transmits a control message and data transmission program, in a downstream direction, i.e. to the client's terminal 102.

Note that the sections, excepting the setting section 308 and communication control section 306 shown in Fig. 3, are to be controlled by the setting section 308 or communication control section 306.

The server apparatus 101 may be a hardware apparatus or a combined system of a hard ware apparatus and software program. In the latter case, the server apparatus 101 is a personal computer or workstation, to execute a program having a function shown in the block diagram of Fig. 3 by utilization of the hardware resources (CPU, RAM, ROM, external memory, network interface) thereof.

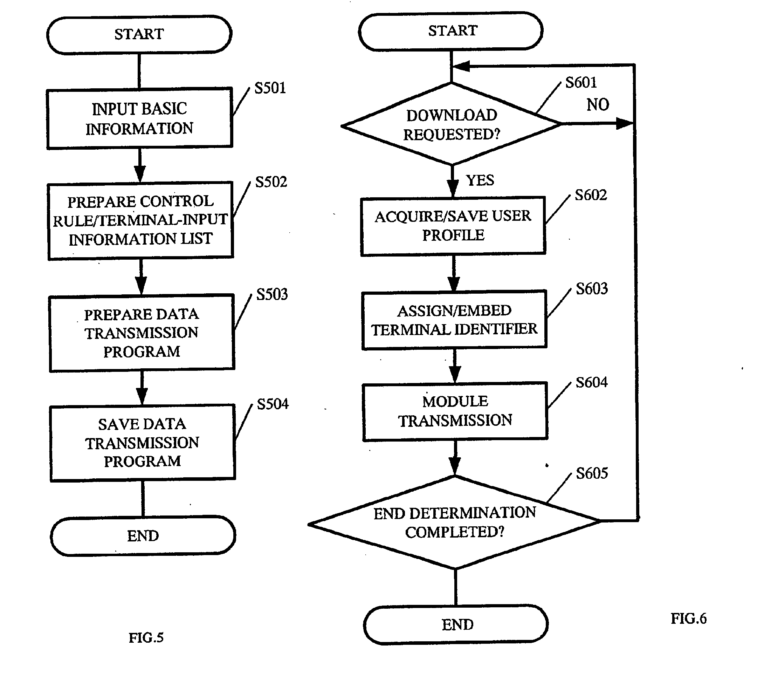

Now, the operation of the server apparatus 101 is explained with using Figs. 5, 6 and 7. The principal operations of the server apparatus 101 include a preparing process of a data transmission program, a transmission process of the data transmission program to a requesting client's terminal 102 and an update and transmission process of a control message.

Fig. 5 is a flowchart showing the operation of a data transmission program preparing process.

At first, basic information is inputted to the setting section 308. This includes data items, such as questions to the user and user's personal information, to be set in a terminal-input information list, data for generating a data input form to be displayed on a display of the client's terminal 102 (data described in HMTL or script language), data or program describing a process for user input data for preparing a control rule, and how to determine (how to calculate) a time to execute an data transmission in the upward direction (step S501).

Then, a terminal-input information list and control rule is prepared on the basis of the information acquired in step S501 (step S502).

Next, prepared is a data transmission program embedded with the terminal-input information list and control rule prepared in Step S502 (step S503). The data transmission program is a program generated in a program language such as Java language, to be executed on the client's terminal 102.

Next, the data transmission program prepared in step S503 is saved in the storage section 307 (step S504). Incidentally, the data transmission program may be prepared in a separate system and then loaded on the storage section 307.

Fig. 6 is a flowchart showing an operation of a transmission process of the data transmission program.

First, the communication control section 306 accepts a download request for the data transmission program to be transmitted from the client' s terminal (step S601). In the case of having received a module transmission request from the client's terminal 102, the process moves to the next step S602. If not, the process enters a wait state.

Then, the communication control section 306 acquires a user profile from a client's terminal having requested download and saves it in the storage section 307 (step 602). Herein, the user profile is information concerning the user of the client's terminal 102, e.g. user name, E-mail address, address, age, gender, etc. In step S602, user profile transmission is requested to the client's terminal 102 having requested to transmit a data transmission program. The server apparatus 101 receives a user profile transmitted from the client's terminal 102 and saves it in the storage section 307. Note that there is no especial restriction in user profile format. The user profile can be defined in entry items to the object and described in a markup language of HTML, XML or the like.

Then, the communication control section 306 assigns a terminal identifier to the client's terminal 102 having requested and embeds the terminal identifier in the data transmission program (step S603). Herein, the terminal identifier is an identifier assigned to a client's terminal 102 under the control of the server apparatus 101, e.g. defining a consecutive number starting at 1. The terminal identifier is used in a control-message control rule in order to designate a particular client's terminal. For example, a control rule "the client's terminal with an odd-numbered terminal identifier only is allowed for transmission" or "the client's terminal with a terminal identifier of 100 - 110 only is allowed for transmission" can be provided to restrict the data transmission in the upward direction.

The storage section 307, in step S603, makes the acquired user profile and the terminal identifier in pair for management. By describing a control rule to transmit terminal identifiers simultaneously with gathering data from the client's terminals 102, it is possible to search for a user profile with a terminal identifier as a key when receiving data from the client's terminals 102. The manager of the server apparatus 101 is allowed to confirm a client's terminal 102 and its user detailed information. Meanwhile, by keeping information specifying a client's terminal 102, e.g. IP address or user E-mail address, in a part of the user profile when the data transmission program is downloaded onto a client' s terminal 102, it is possible to detect a fact that the data transmission program has been downloaded a plurality of times onto the same client's terminal 102.

Then, the module transmitting section 304 transmits a data transmission program to the client's terminal 102 having forwarded a module transmission request (step S604).

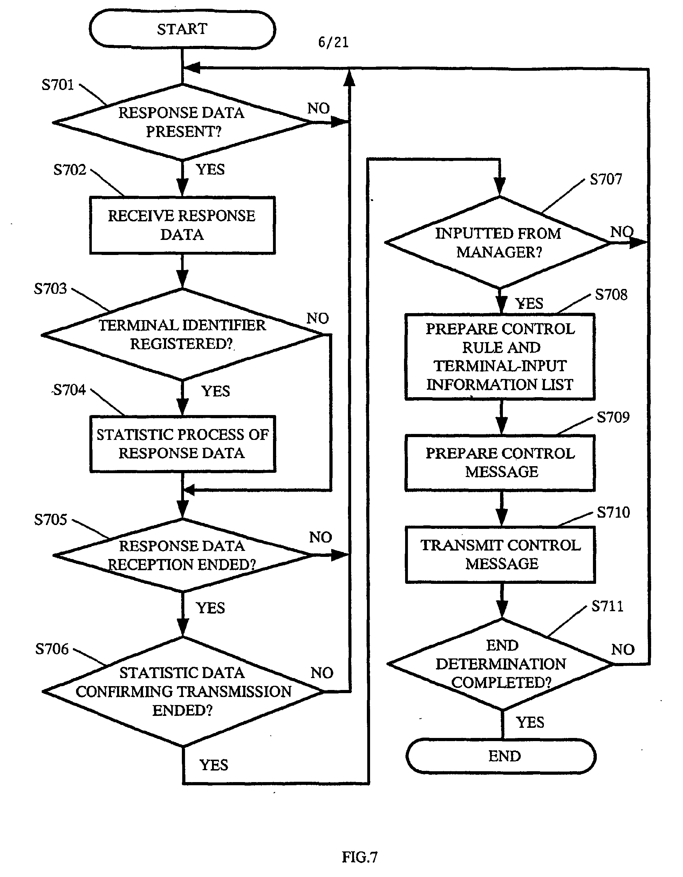

Fig. 7 is a flowchart showing the operation of an update and transmission process of a control message.

The communicating section 302 confirms, at all times, a presence or absence of data transmission from the client's terminal 102 (step S701). In the case of a presence of data reception, the process moves to step S702. Where there is no reception, confirmation is made, although not shown, as to whether a reception wait state has continued for a predetermined time or not. When a predetermined time has elapsed, the process moves to step S707 while, when not elapsed, the process enters a reception wait state.

Then, the data receiving section 305 reads therein the response data from the client's terminal 102 (step S702).

Next, the communication control section 306 performs a confirmation process as to whether the terminal identifier contained in the response data is an identifier already registered in the server apparatus 101 or not (step S703). In the case of confirmation of the terminal identifier as a registered ID, the process moves to step S704. On the other hand, in the case of an unregistered terminal identifier, i.e. invalid terminal identifier, the process proceeds to step S705. Note that the step S703 can be skipped over where no terminal identifiers are used.

Then, the communication control section 306 carries out a statistic process or data analysis on the response data, and saves a result thereof in the storage section 307 or starts up another program or so (step S704). The statistic process is, for example, includes counting for the total number of response data and the number of YES/NO answers where the response data is an answer of YES/NO to a question.

Then, the communication control section 306 determines whether to end the reception process of response data to one piece of control information (step S705). This determination utilizes the information on the total number of response data, reception time or the like. In the case of ending the reception of response data, the process moves to step S706. Where continuously accepting response data, the process returns to step S701. Incidentally, the server apparatus 101 is not always grasping the total number of client's terminals 102 in a state of mutual communication, the process, when elapsed a predetermined time-out period moves to step S706 though not shown.

Next, the communication control section 306 makes reference to the statistic process result determined in the step S704, and determines whether to transmit a control message to the client's terminal 102 or not (step S706). In case of transmitting a control message, the process proceeds to step S707, while, in other case, the process returns to step S701.

Then, the communication control section 305 confirms whether an instruction for changing the control information has been issued from the manager onto the setting section 308 or not (step S707). In the case of a presence of instruction, the process returns to step S708. When there is no instruction, the process returns to step S701.

Then, the communication control section 306 prepares a terminal-input information list describing the information items to be acquired on the client' s terminal 102 and a control rule describing a control algorithm for the data transmission in the upward direction, on the basis of the information the manager of the server apparatus 101 newly inputted through the setting section 308. (step S708).

Next, the communication control section 306 prepares a control message including the terminal-input information list and control rule prepared in step S708 (step S709). Note that, when a control message has been prepared before starting a communication with the client's terminal 102, the steps S708 and S709 are to be skipped over.

Then, the communication control section 306 simultaneously transmits the control message prepared in the step S709 to the client's terminals 102 (step S710).

Then, the communication control section 706 determines whether to end the communication process or not according to the request from the manager or client's terminal. In case of not ending, the process returns to step S701 (step S711).

By the above, the server apparatus 101 can transmit a control message to the client's terminal 102, as required. By sequentially changing the control information, the number of the terminals can be narrowed.

For example, in the initial stage having many clients' terminals, the control message is provided by such simple questions that the client's terminal 102 satisfactorily replies with less response data such as by a letter string of YES/NO. Due to this, even where the number of accesses from the client's terminals 102 is many, the reception process per access requires less, thus reducing the total communication load. Furthermore, the control message to transmit next is described with a control rule such that an answer is transmitted only where the first round of question is answered YES. When the number of answers YES in the response data to the second round of control message is not less than a predetermined number, a control message including a question is transmitted again. This control message is described with a control rule such that an answer is transmitted only where YES is replied to both the first and second round of questions. The subsequent repetition of the similar process makes it possible to narrow down the number of client's terminals 102 to transmit response data.

In the next stage, after narrowing down to a constant number of client's terminals, the control rule can be described, in its terminal-input information list, with data items so that the client's terminal can transmit information in an amount much more than that in the initial stage besides the restrictive conditions for effecting data transmission.

By the method shown in the above example, the server apparatus 101 can gather necessary information from the client's terminals 102 depending upon the current situation while narrowing the number of accesses from the client's terminals 102.

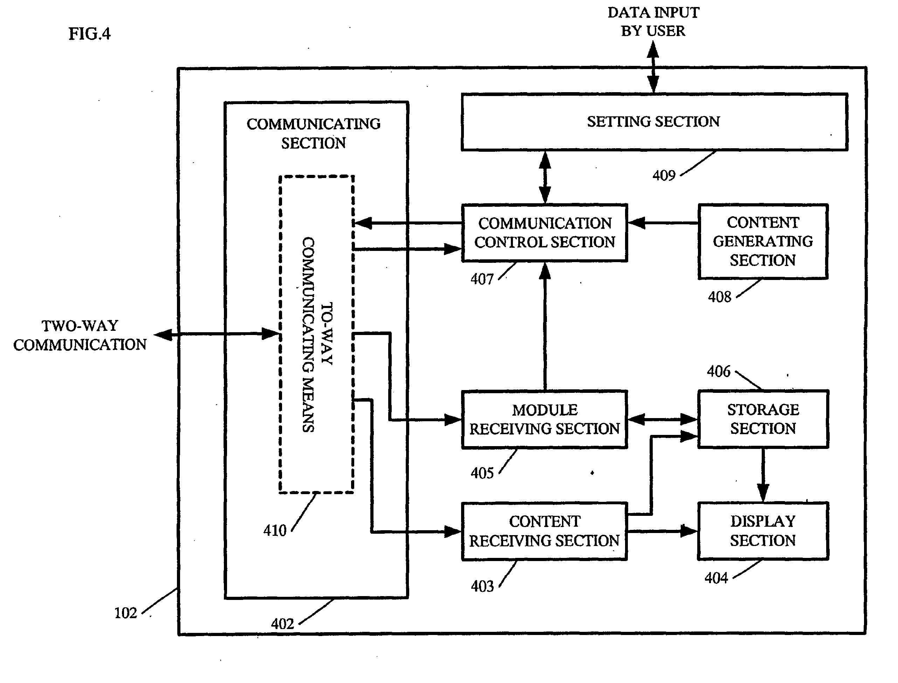

Now, explanation is made on the client's terminal 102. Fig. 4 is a block configuration diagram of the client's terminal 102.

A communicating section 402 carries out a mutual communication with the server apparatus 101 through a network 103 having a two-way communicating section 410.

A content receiving section 403 receives a data file described in HTML or XML or stream data from the server apparatus 101 through the communicating section 402.

A display section 404 carries out an analysis process, decode process and display process on a received information content, to acquire an information content from the content receiving section 403 and display it.

A module receiving section 405 downloads a data transmission program from the server apparatus 101.

A storage section 406 stores and manages the data received from the server apparatus 101. This temporarily saves the data transmission program received by the module receiving section 405, and stores the information contents received by the content receiving section 403. The information contents accumulated in the storage section 406 can be outputted onto the display section 404.

The communication control section 407 reads a data transmission program from the storage section 406 to thereby effect control of the data transmission in the upward direction. Meanwhile, the communication control section 407 receives a control message transmitted by the server apparatus 101, to update the terminal-input information list or control rule of the data transmission program.

A content generating section 408 generates video or audio data to be transmitted to the server apparatus 101. Also, the content generating section 408, having a function to analyze a video image and audio sound, can output a data analysis result or acquire data from the external.

A setting section 409 accepts an data input from the user and outputs it to the communication control section 407. Also, the setting section 409, having a display for displaying data, analyzes data-input form data such as in a script to generate a data input form (same meaning as data-input GUI) contained in the data transmission program, to display a data-input form for the user. The information the user has inputted to the data input form is inputted to a data transmission program being executed in the communication control section 407.

A two-way communicating section 410 transmits the data from the communicating control section 407 to the server apparatus 101. The two-way communicating section 410 outputs the information content, control message and data transmission program received from the server apparatus 101 to the content receiving section 403, the communication control section 407 and the module receiving section 405.

The client's terminal 102 may be a hardware apparatus or a combined system of a hardware apparatus and software program. In the latter case, the client's terminal 102 is a personal computer or workstation. By utilizing the hardware resources (CPU, RAM, ROM, external memory and network interface) possessed by them, executed is a program having functions shown by the blocks in Fig. 4.

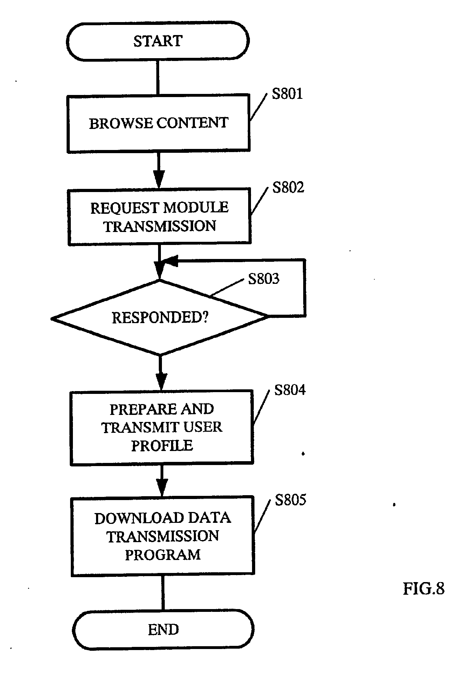

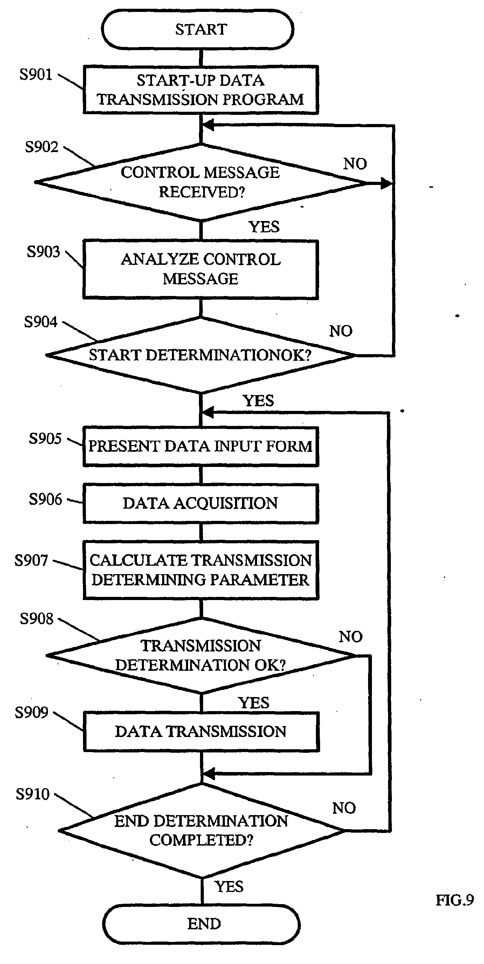

Now, explanation is made on the operation of the client's terminal 102, by using Figs. 8 and 9. In this Embodiment 1, the client's terminal 102, principally, receives the data transmission program and transmits data according to the data transmission, program.

First explained is a module reception process. Fig. 8 is a flowchart showing a procedure of a module reception process by the client's terminal.

At first, the user browses a Web page of the server apparatus 101 at the setting section 409 to confirm an information and service content (step S801). In the case where an information and service content is known, this step can be omitted.

Then, the communication control section 407 requests the server apparatus 101 to transmit a data transmission program (step S802).

Next, the communication control section 407 waits a response to a message transmitted, in step S 802, to the server apparatus 101 (step S803). When there is a response, the process moves to the next step S804. When there is no response, a wait state is entered. Meanwhile, although not shown, when a time-out period for waiting a response elapses, the process is ended.

Next, the communication control section 407 receives response data from the server apparatus 101, and prepares user profile information according to the data description. This is transmitted to the server apparatus 101 (step S804). Incidentally, where the server apparatus 101 does not request to gather user profiles from the client's terminals 102, the steps S803 to S804 can be omitted.

Then, the communication control section 407 downloads a data transmission program from the server apparatus 101 (step S805). However, the server apparatus 101 can prohibit against the data transmission program from being downloaded where a received user profile is not satisfied with a predetermined condition. The data transmission program downloaded is stored in the storage section 406. Note that the data transmission program can be stored onto the client' s terminal through an arbitrary storage medium, instead of transmitting and receiving a data transmission program through the network.

Now, the data transmission process is explained. Fig. 9 is a flowchart showing a procedure of a data transmission process by the client's terminal 102. First, the communication control section 407 reads in a data transmission program saved in the storage section 406 and then starts it up (step S901). The subsequent steps are to be executed by the data transmission program of the communication control section 407.

Next, the communication control section 407 carries out a reception confirming process of a control message transmitted from the server apparatus 101 (step S902). In the case of a presence of control message, the process advances to step S903. Where it is absent, the process moves to step S904.

Then, the communication control section 407 performs an analysis process of the received control message (step S903). The control message contains a terminal-input information list 1301 and control rule 1305 shown in Fig. 13. Confirming the contents of them, the control information at present is updated. The data transmission program will operate according to the updated control information after that.

Then, the communication control section 407 makes reference to a transmission start condition defined by the terminal-input information list 1301 and control rule 1305, to determine whether a data transmission process can be started or not (step S904). In the case of satisfying the data transmitting condition, the process moves to the step S905, while, where not satisfying it, the process returns to the step 905 or is ended though not shown. Herein, the transmission start condition is set with conditions of start time, user authentication, available term of the data transmission program and the like.

Then, the setting section 409 generates and displays a data input form according to an instruction from the communication control section 407 (step S905). However, this step can be omitted where the data outputted by the content generating section 408 or an analysis result of that data is transmitted to the server apparatus 101.

Next, the setting section 409 delivers the input data to the communication control section 407 (step S906). This data can be acquired from an outside of the content generating section 408 or client's terminal 102. Incidentally, the communication control section 407 can also hold the acquired data therein instead of immediately transmitting it.

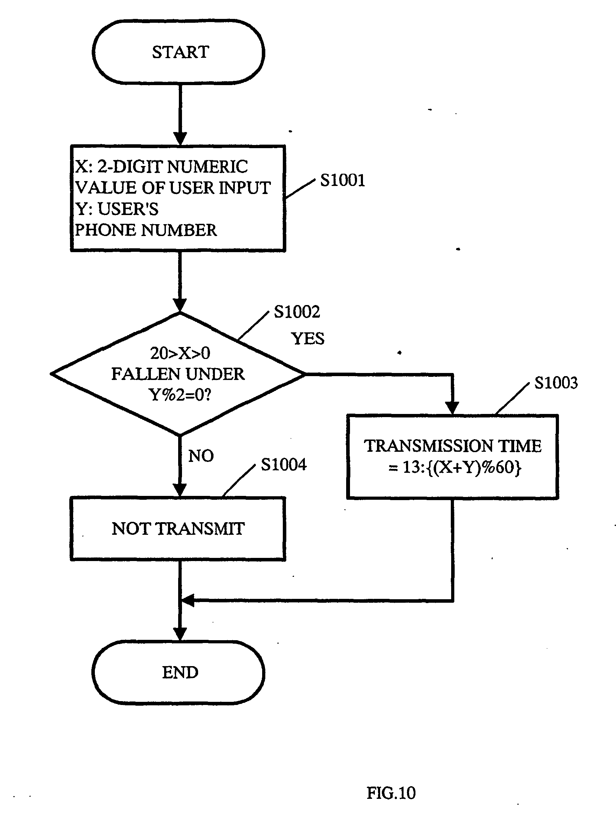

Then, the communication control section 407 calculates a transmission determining parameter to be used in determining an execution of data transmission to the server apparatus 101 (step S907). The transmission determining parameter is calculated by an operation algorithm for executing a predetermined operation formula as a part of the data transmission program. The data acquired in step S906 is substituted in this operation formula. An example of the operation will be described in detail later by using Fig. 10. This operation process can calculate a range of transmittable time besides the binary data representative of allowing/not-allowing transmission.

Next, the communication control section 407 makes reference to the transmission determining parameter calculated in step S907, to determine allowing/not-allowing transmission. In the case of determining for transmission, the process moves to step S909 while, where against transmission, the process proceeds to step S910. Meanwhile, although not shown, when determined to wait transmission, a wait state is entered.

Then, the communication control section 407 transmits the entire or a part of the data acquired in step S906 to the server apparatus 101 (step S909). Otherwise, a connection can be provided between the client's terminal 102 and the server apparatus 101, to carry out an arbitrary communication process, e.g. two-way video communications.

Next, the communication control section 407 determines whether to end the data transmission process or not according to a predetermined end determining criteria (step S910). In the case of not ending the data transmission process, the process returns to step S901 to continue the process. Herein, the end determining criteria may use the condition concerning end time or transmission data amount.

Now, description is made in detail as to how the communication control section 407, in step S906, calculates a communication determining parameter by the utilization of a terminal-input information list and control rule, shown in Fig. 13, within the data transmission program.

The terminal-input information list 1301 is a description with the items for the data to be acquired from the client's terminal 102 or its user. The terminal-input information 1302 includes the information to be transmitted to the server apparatus 101 and the data to be used in calculating a transmission determining parameter 1304. The former includes, as an example, user name or address and answer to a question while the latter includes, as an example, arbitrary number of six figures. Meanwhile, the terminal-input information list 1301 also includes the data for generating a data input form to be displayed on the display of the client's terminal 102 (data described in HTML or script language). Due to this, the communication control section 407 generates a data input form according to the terminal-input information list 1301, thereby acquiring a terminal-input information 1302 from a user.

The control rule 1305 is a script or program 1307 describing how to process user-input data and how to transmit data to the server apparatus 101. Herein, on the assumption that terminal input information x, y is an input variable designated by a user, calculated are a transmission determining parameter R representative of allowing/not-allowing transmission of data and a transmission time Ts by the use of two predetermined functions f(x, y) and g(x, y). The function g(x, y) is designed such that Ts calculated is a value with proper variation.

Specifically, provided that x is a numeric value of two figures inputted by an owner of a client' s terminal and y is a telephone number of the owner (a string of numerals without having parenthesis or hyphen), a transmission determining function f(x, y) and transmission time calculating function g (x, y) are assumably represented by a program as shown in Fig. 10. Herein, step S1003 corresponds to the function g(x, y) while step S1002 to the function f(x, y).

First, the user inputs an arbitrary numeric value of two figures and telephone number (step S101).

Next, it is determined whether or not the arbitrary numeric value thus inputted lies in a range of 0 to 20 and the telephone number is a multiple of 2 (step S1002). If it is an even number fallen within the range, a transmission time is calculated (step S1003). Herein, determined is a remainder of a sum of the input arbitrary numerals and telephone number divided by "60", at a time of which transmission is to be made.

In the case of not within the range or not an even number, the process is ended without transmission (step S1004).

In this manner, each client's terminal 102 can properly decentralize the time of data transmission to the server apparatus 101 and restrict the amount of transmission data. This can reduce the load concerning the data reception by the server apparatus 101.

Meanwhile, the server apparatus 101 is allowed to update the terminal-input information list and control rule involved in the data transmission program by transmitting the control message to the client's terminal 102.

On the other hand, the client's terminal 102, if receiving a control message from the server apparatus 101, inputs the control message to the data transmission program. The data transmission program updates the previously-involving control rule and terminal-input information list with the terminal-input information list and control rule contained in the control message, whereby it makes control of data transmission in an upward direction according to a new terminal-input information list and control rule. The data transmission program can also control the data transmission in the upward direction by using both the previously-involving control rule and terminal-input information list and the control message.

Thus, the one-versus-multiplicity two-way communicating system, capable of simultaneous transmitting from the server apparatus 101 to the client's terminals 102, can freely make use of a control message containing a terminal-input information list and control rule in addition to the data transmission program. This enables the more flexible data transmission control in the upward direction. For example, the server apparatus 101 gathers the response data to a control message, thereby repeating the transmission of a new control message reflecting a data gathering result. This makes it possible to carry out data collection from client's terminals 102 on the basis of selecting the client's terminals 102 satisfying a particular condition.

Furthermore, an advantageous effect is obtained that, even where communication is impossible from the server apparatus to the client's terminal, control can be made for the data transmission from the client's terminal to the server apparatus. Furthermore, by simultaneous transmitting control information to the client's terminals through a communication network, it is possible to change the way of controlling data transmission of from the client's terminal to the server apparatus. An advantageous effect is obtained that, by transmitting control information suited for a purpose, the server apparatus can gather data only from the client's terminals satisfying a particular condition and adjust the amount and time of data transmission from the client's terminals.

Incidentally, although Embodiment 1 described the system having the fixed server apparatus and client's apparatus, the invention is not limited to such a system. Namely, the same effect is obtainable by the similar way in such a system that the information processing apparatus assumes a status as a server apparatus or client's apparatus to be changed depending upon a situation.

### Embodiment 2

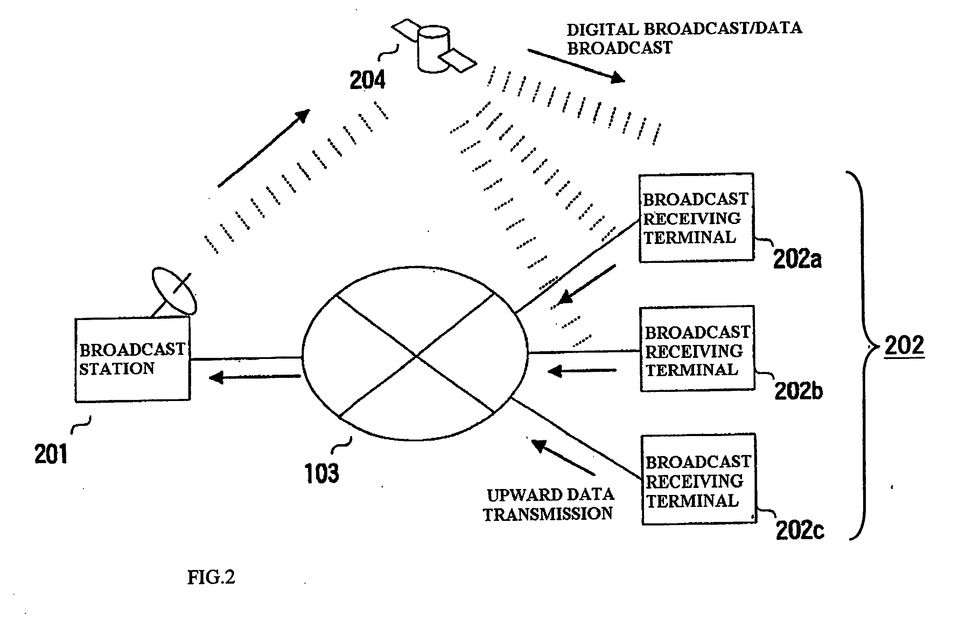

Fig. 2 is a configuration view of a two-way communicating system according to Embodiment 2 of the invention. The two-way communicating system of Fig. 2 is different from that of Embodiment 1 in that a broadcast station 201 having a function of forwarding digital broadcast is provided in place of the server apparatus 101, broadcast receiving terminals 202 having a function of receiving digital broadcast are provided in place of the client's terminals 102, and a broadcast satellite 204 relays digital broadcast. Note that the broadcast satellite 204 can be a communication satellite.

This is different from Embodiment 1 in that the broadcast station 201 distributes a data transmission program to the broadcast receiving terminals 202 by the utilization of data broadcast.

Namely, the broadcast station 201 transmits a data transmission program on a data broadcast to the broadcast receiving terminals 202, to transmit a control message through the data broadcast in synchronism with a broadcast content. Meanwhile, the broadcast receiving terminal 202 starts up the data transmission program received from the data broadcast, to input the control message received from the same data broadcast into the data transmission program. The data transmission program instructs the user on the broadcast receiving terminal 202 to input data, and transmits the input data to the broadcast station 201.

Now, explanation is made on the configuration and operation of the broadcast station 201.

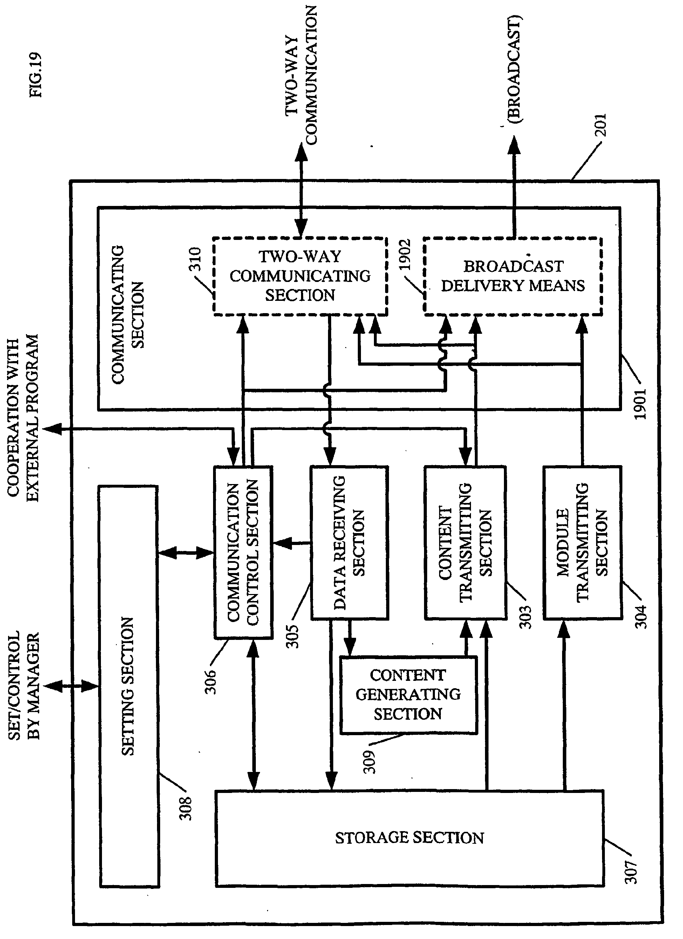

Fig. 19 is a block diagram showing a configuration of the broadcast station 201 of Embodiment 2.

This is different from Embodiment 1 in that a communicating section 1901 has a broadcast delivering section 1902 so that the broadcast delivering section 1902 can transmit broadcast programs, data transmission programs and control messages.

However, because a data transmission program is transmitted to unparticular broadcast receiving terminals 202 by utilization of a data broadcast, the terminal identifiers unique to terminals cannot be embedded in the data transmission program.

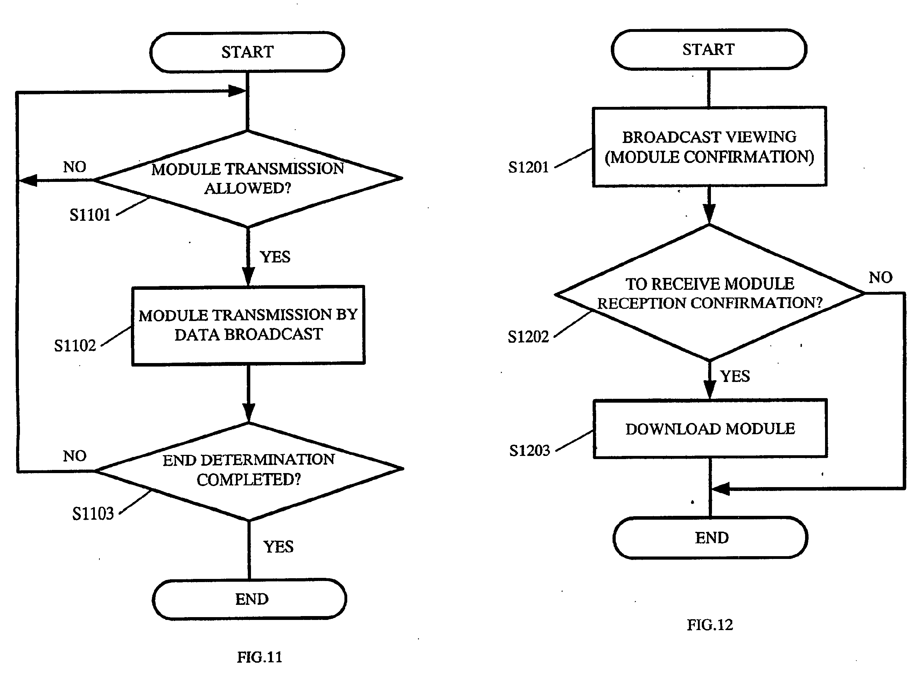

Now, explanation is made on the operation of the broadcast station 201. This is different in module transmitting process from the operation of Embodiment 1 but the same in module generating and control message update processes as that. Fig. 11 is a flowchart showing a procedure of a module transmitting process of Embodiment 2.

First, the communication control section 306 confirms an existence of data transmission program, to determine whether a predetermined module transmitting condition is satisfied or not (step S1101). A transmission start time, for example, is set as a module transmitting condition. In the case of satisfying the module transmitting condition, the process moves to the next step while, when not satisfying the condition, the process enters a wait state or proceeds to step S1103 though not shown.

Next, the module transmitting section 304 transmits the data transmission program through a data broadcast to the broadcast receiving terminals 202 (step S1102).

Then, the communication control section 306 performs an end determination of the module transmitting process on the basis of a predetermined end condition (step S1103). In the case of not ending, the process returns to step S1101 to repeat the process. For example, this falls under the case with a carousel transmission to periodically transmit an identical data transmission program.

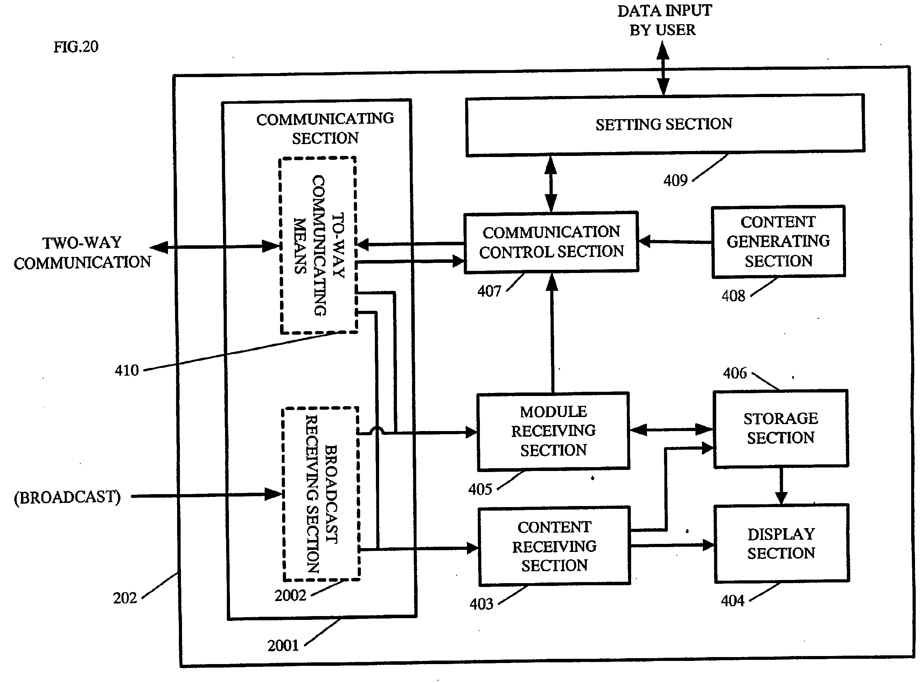

Fig. 20 is a block diagram showing a configuration of a broadcast receiving terminal 202 of Embodiment 2. The difference from Embodiment 1 lies in that a communicating section 2001 has a broadcast receiving section 2002 so that the broadcast receiving section 2002 can receive broadcast programs, data transmission programs and control messages.

Now, explanation is made on the operation of the broadcast receiving terminal 202. This is different from the operation of Embodiment 1 in respect of a module receiving process. Fig. 12 is a flowchart showing a procedure of a module receiving process of Embodiment 2.

First, the content receiving section 403 displays a received broadcast, and the user who viewed it confirms a service content of data broadcast (step S1201).

Next, the communication control section 407 inquires the user whether to receive (or download) a data transmission program or not (step S1202). In the case there is an instruction for module reception, the process moves to step S1203 while, where there is no instruction, the process is ended.

Then, the module receiving section 405 separates the data transmission program contained in the data broadcast, and outputs a separated module to at least any one of the communication control section 407 and the storage section 406.

Incidentally, where the data transmission program is automatically downloaded without the attendance of a user, the steps S1201 and S1202 are not executed. The data transmission program can be also loaded onto the broadcast receiving terminal 202 through the network 103 of Fig. 2 similarly to Embodiment 1 or an arbitrary recording medium.

In this manner, the broadcast-type system is capable of carrying out transmission simultaneously to a number of users through a broadcast satellite, hence realizing a program excellent in use in respect of two-way communications. Even in this case, by incorporating the information restricting the responsive client's terminals in the control message, it is possible to adjust the timing to transmit response data toward the server apparatus. This allows the server apparatus to reduce the communication load over the network. Sequential narrowing is also possible similarly to Embodiment 1. Also, two-way communication is possible to carry out with control messages and response data through the network 103, similarly to Embodiment 1. Namely, after narrowing client's terminals into a predetermined number through a data broadcast, switching can be made to a two-way communication through the network 103 to enable communication with more precise information between the server apparatus and the client's terminals. Thus, Embodiment 2 can realize a flexible two-way communicating system.

### Embodiment 3

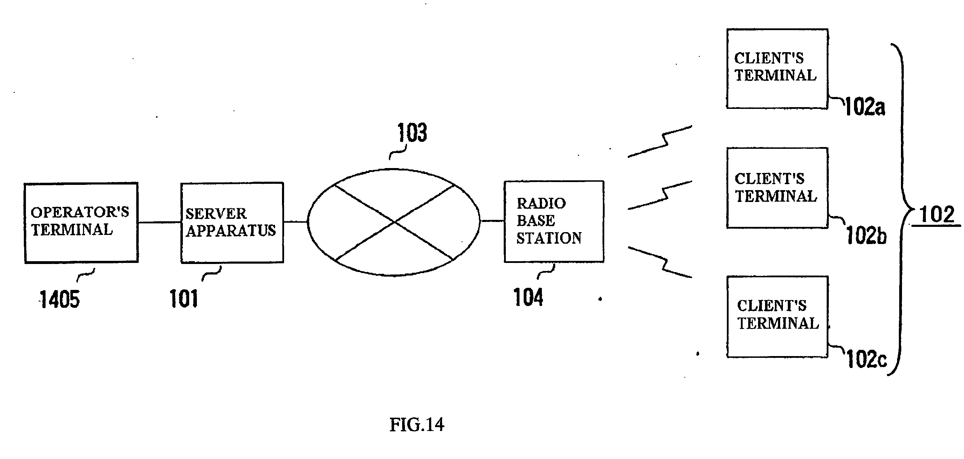

Fig. 14 is an overall configuration diagram of a ticket reservation system according to Embodiment 3 of the invention.

This is different from Embodiment 1 in that an operator terminal 1405 is added to the server 101 as a ticket reservation center to implement ticket advance sale, and the client's terminals 102 as cellular phones or ordinary subscription telephones having an environment for executing a program developed in a program language, such as a Java language, are all connected through a radio network.

The server apparatus 101 and the client's terminals 102 have the same configuration as those of Embodiment 1.

Now, explanation is made on the operation and function of the server apparatus 101, by using Figs. 5, 6 and 21.

First, the server apparatus 101, prior to starting ticket advance sale, prepares as a data transmitting program a Java program for ticket-reserving communication, similarly to the data transmission program of Fig. 5. This program has a terminal-input information list describing the information concerning ticket reservation inputted by a user as a basic information.

Then, the server apparatus 101 transmits the data transmission program to the client's terminal 102 according to the module transmission process procedure of Fig. 6. Note that the data transmission program can be distributed by E-mail onto the client's terminals 102 who previously notified a desire for ticket reservation.

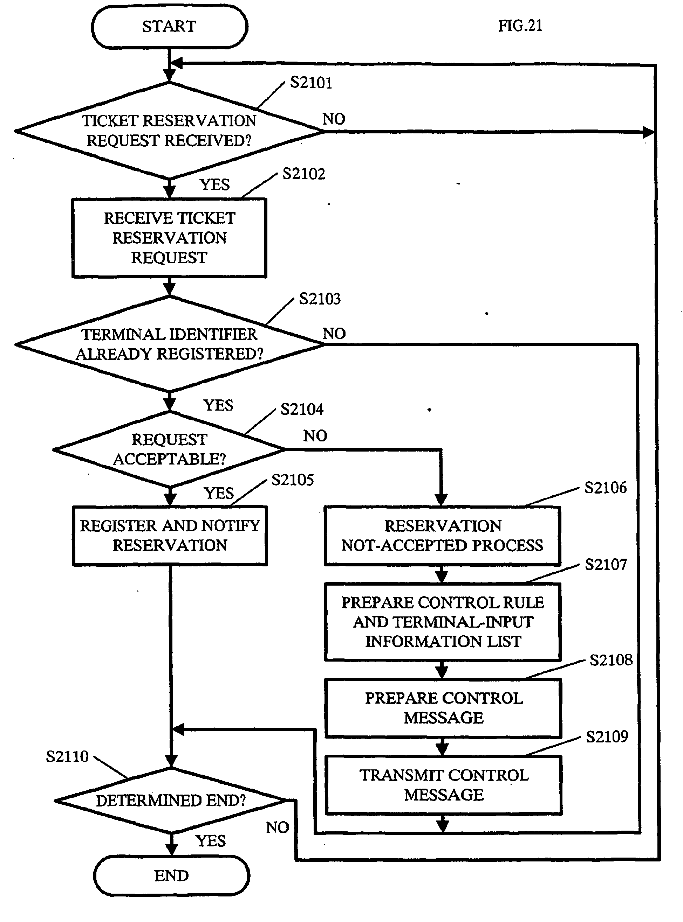

Now, explanation is made on a ticket-reservation accepting process by the server apparatus 101, by using Fig. 21.

First, the communication control section 306 checks, at all times, whether it receives a ticket-reservation request (step S2101). In the case of having received a ticket-reservation request, the ticket-reservation request is taken out of the communicating section 302 (step S2102).

Next, the communication control section 306 checks whether the terminal identifier of received data is an ID previously registered or not (step S2103). When already registered, the process advances to step S2104 while, when unregistered ID, the process moves to step S2110.

Then, the communication control section 306 confirms a reservation status. When the received ticket-reservation request is acceptable (step S2104), the reservation request is registered, to notify the client's terminal 102 of completing a ticket reservation (step S2105). In case of not acceptance, a content to instruct the user subsequently is determined from the received reservation request content and reservation status (step S2106). For example, a determination can be made to transmit to the user a control rule to notify that the requested reservation is already full by other reservations and instruct a user's cellular phone to request a talk with an operator. Meanwhile, where there are full reservations, it is possible to enable a second preferential ticket reservation previously without requesting a talk with an operator.

Next, the communication control section 306 prepares the control rule and terminal-input information list (step S2107) and a control message (step S2108).

Then, the communication control section 306 transmits the control message to the users whose reservations have not been accepted (step S2109).

Then, the communication control section 306 determines whether to end the data receiving process according to a predetermined end determining criteria (step S2110). In case of continuing the reservation process, the process returns to step S2101.

The above operation, in the first round of steps S2101 to S2110, notifies a refusal of the first preference ticket reservation to the user. Accordingly, the second received data is described on whether the user desires to continue the ticket reservation or not (step S2102). In step S2106, the received data is analyzed. In the case that the data is a notification to end the ticket reservation, the process is ended in the later step S2110. On the other hand, where the received data is a notification to continue the ticket reservation, a telephone line is connected between the server apparatus 101 and the client's terminal 102 to proceed the ticket reservation process according to a direct talk between the telephone operator and the user (step S2106). Finally, reservation acceptance information is transmitted from the server apparatus 101 to the client's terminal 102 (steps S2107 to S2109) thus completing the entire process (step S2110). Note that the telephone-line connecting process can be made by either of the server apparatus 101 or the client's terminal 102.

Meanwhile, the server apparatus 101, in case of ending the process without confirming a reservation result, can end in step S2110 the processing of the data transmission program to notify a reservation result by the utilization of an E-mail.

Next, explanation is made on the operation and function of the client's terminal 102, by using Figs. 8 and 9.

First, the client's terminal 102, prior to starting a ticket reservation, downloads the data transmission program from the server apparatus 101 according to a process of Fig. 8.

Then, when a ticket reservation start time is nearing, the user starts up the data transmission program downloaded on the client's terminal 102 in accordance with the process of Fig. 9 (step S901).

Next, the communication control section 407 carries out a reception confirming process of a control message transmitted from the server apparatus 101 (step S902). Where there is a received control message, the process proceeds to step S903 while, where it is absent, the process moves to step S904.

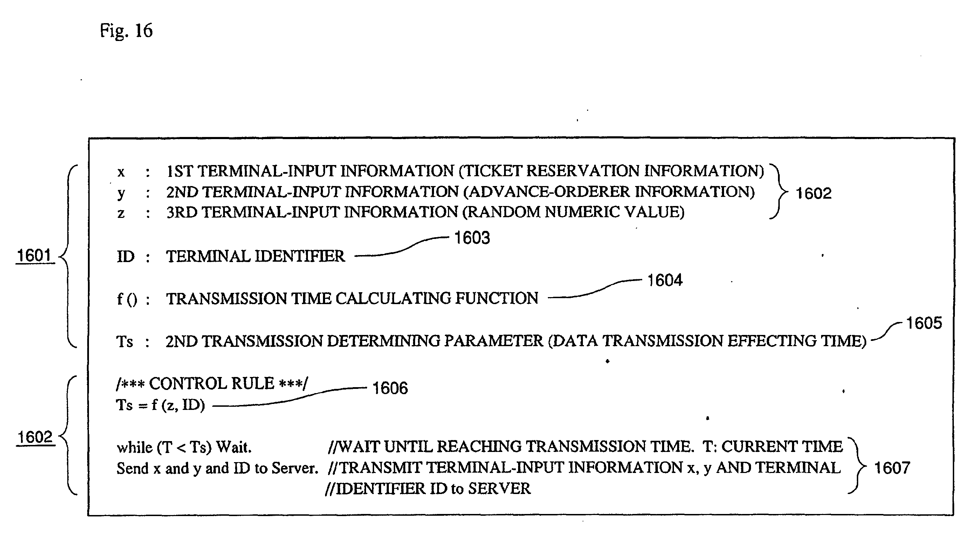

Next, the communication control section 407 carries out an analyzing process on the received control message (step S903). The control message contains a terminal-input information list and control rule shown in Fig. 16. Confirming these contents, the control information at present is updated. The data transmission program will subsequently operate according to the updated control information.

Next, the communication control section 407 checks whether the current time reaches a start time or not. When the start time is not reached, the process returns to step S902 (step S904). Otherwise, when a ticket-reservation end time is already reached, the process is ended though not shown. Note that the information concerning a time range that a ticket reservation process is available is described in the control rule.

Then, the data transmission program displays a data input form for inputting data items concerning ticket reservation on the display of the client's terminal 102 according to the terminal-input information list (step S905).

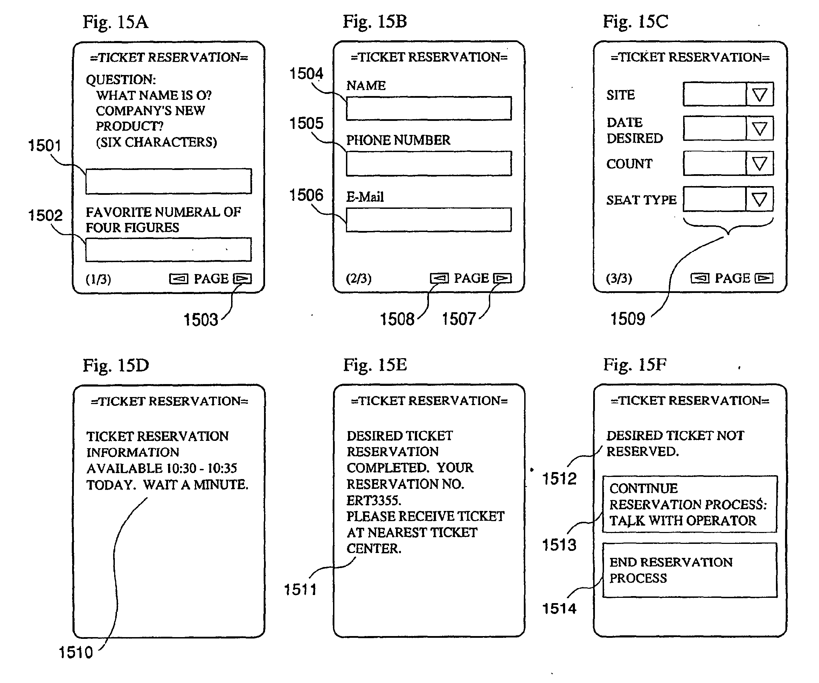

Fig. 15 is an example of a data input form to be generated from the terminal-input information list. The data input form is formed with three pages shown in Figs. 15A - 15C. These are to be displayed, in order, on a display of a cellular phone.

Fig. 15A is a data input form displaying a textbox 1501 in which is to enter an answer to a quiz concerning sponsor's merchandise advertisement, a textbox 1502 in which is to enter a numeric value of arbitrary four figures, and a button 1503 to move to the next screen. The data form of the data input form of Fig. 15B has textboxes for entering user's name 1504, telephone number 1505 and E-mail address 1506. Similarly, Fig. 15C is a screen to enter ticket reservation information, having a list box 1509 for selecting a desired site, a desired date, ticket count and seat class.

After the user has inputted the data items of Figs. 15A - 15C (steps S906), the data transmission program calculates a transmission determining parameter according to the control rule (step S907) to execute a data transmission process (steps S908 and S909).

An example of terminal-input information list and control rule is shown in Fig. 16. In Fig. 16, three kinds x, y and z of terminal-input information 1602 are used. It is herein assumed that x is the data representative of ticket reservation information, y the data representative of advance-orderer information and z the arbitrary numeric value data the user has inputted. Meanwhile, the terminal identifier 1603 added to the data transmission program is assumably ID.

The function f(z, ID) is a function to calculate a transmission determining parameter Ts, wherein Ts is a value representative of a data transmission time. The function f(z, ID) is a function introduced in order to avoid a concentration of ticket reservation calls in a brief period of time. Design is made such that the output parameter Ts is a random, properly distributed value.

Herein, random numerical data irrespective of ticket reservation (user-preferred numeric value of four figures) is added to the terminal-input information in order to readily disperse the Ts values to be calculated by the function f(z, ID).

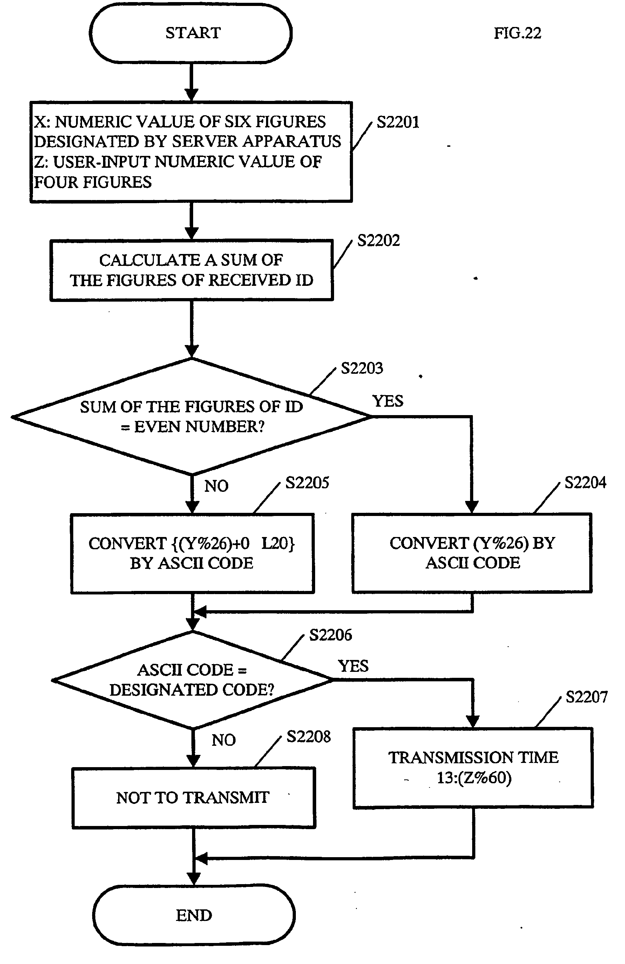

The control rule, concretely, is represented by a flowchart of the transmission time calculating function f(z, ID) shown in Fig. 22.

First, a terminal identifier ID comprising of the numeric value of six figures is assigned from the server apparatus 101, and the first terminal-input information x is inputted by the user (step S2201).

Then, the six figures of a numeric value of the ID are added together (step S2202). It is checked whether the sum is an even number or an odd number (step S2203). When it is an even number, conversion is made such that the remainder of the sum divided by "26" gives a capital alphabetical letter (step S2204). When an odd number, conversion is made such that it gives a lower-case alphabetical letter (step S2205).

Then, check is made as to whether the determined alphabetical letter agrees to a preset one or not (step S2206). When not in agreement, transmission is considered not to be allowed and hence the process is ended without transmission from the client' s terminal (step S2208). When in agreement, a previously designated time is calculated (step S2207).

It is herein assumed that the user does not know the algorithm. Meanwhile, it is also assumed how to determine an alphabetical letter is not fixed but appropriately changed. The ID can check for a date-and-hour of issuance and detect an old ID.

With the algorithm, it is possible to specify a transmission time of 13:00 - 13:59 correspondingly to the remainder of the random value z of four figures divided by 60. When the current time reaches the value thus determined, the terminal-input information x and advance-orderer information y as a ticket reservation information is transmitted to the server apparatus 101 as a ticket reservation center.

When the data transmission time Ts is calculated, the data transmission program displays a message 1510 concerning a data transmission time, as shown in Fig. 15D, on the display of the client's terminal 102.

Then, an end determining process is made (step S910). In the case that a ticket reservation process is interactively made between the client's terminal 102 and the server apparatus 101 instead of ending the process by merely transmitting the ticket reservation information, the process returns to step S902.

In the case that a newly received control message shows an acceptance of a first preferential ticket reservation, reservation-acceptance number, ticket delivery, payment 1511 are displayed on the display of the client's terminal 102, as shown in Fig. 15E. In step S910, determination is made that ticket reservation has been completed thus ending the process. Note that an electronic ticket can be transmitted onto the client's terminal 102 instead of making a ticket reservation.

Meanwhile, where the control message shows a rejection of a first preferential ticket reservation, the display of the client's terminal 102 displays a screen notifying 1512 a reservation rejection as shown in Fig. 15F (step S905). The user selects whether to continue the ticket reservation process (step S905). When the reservation process is not continued, the process is ended (step S910). When the reservation process is continued, a telephone line is connected between the user on the side of the client's terminal 102 and the telephone operator on the side of the server apparatus 101 according to the control message, to perform a ticket reservation process on the basis of a talk between the user and the operator (step S909).

In this manner, in the first round of process, the first preferential ticket reservation is automatically processed on the basis of the proper decentralized time of transmission of ticket reservation information from the client's terminals 102 to the server apparatus 101. In the case the first preferential ticket reservation is rejected, the server apparatus transmits a new control message so that, in a second round, ticket reservation process can be made by a talk between the telephone operator and the user. This prevents the concentration of accesses to the server apparatus 101 in a brief period of time. Simultaneously, convenience can be improved for the user.

In such a case that the ticket reservation information transmitted from the client's terminal 102 is rejected by the server apparatus 101 as the above, a method can be considered that the user performs a series of data input processes to re-transmit new ticket reservation information. Otherwise, there is a method for designing a control message so that the second preference and the subsequent, besides the first preferential ticket information, can be inputted in the input information list of the data transmission program.

Incidentally, although this embodiment allowed the user to start up the data transmission program, it is possible to start up the data transmission program immediately after being downloaded so that the reservation information inputted, at or after a ticket reservation start time, by the user can be automatically transmitted to the server apparatus 101.

### Embodiment 4

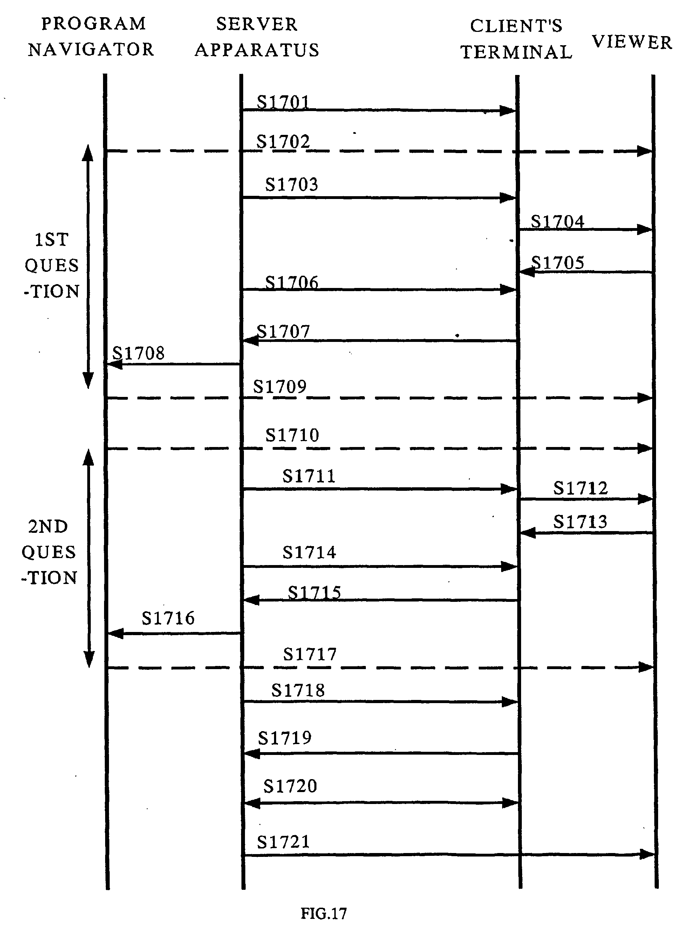

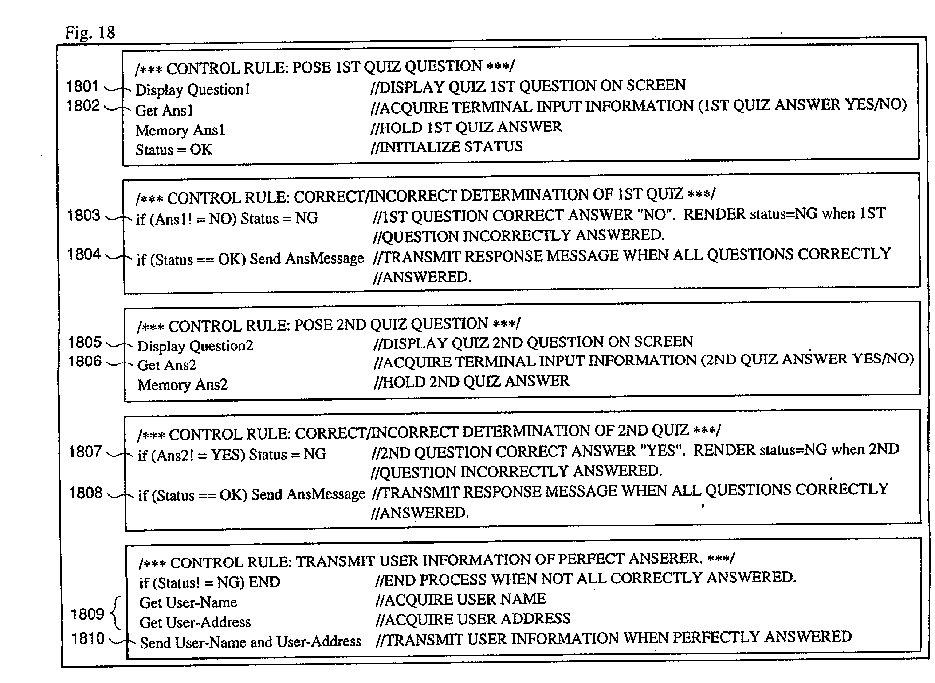

Fig. 17 is a sequence diagram of a process that the two-way communicating system of Embodiment 4 of the invention is applied to a audience participation program of a digital satellite broadcast. Meanwhile, Fig. 18 is an example of a terminal-input information list and control rule. Note that Embodiment 4 has the same system configuration and server apparatus 101 and client's terminal 102 as those of Embodiment 2.

The operation sequence of Embodiment 4 is explained by using Figs. 17 and 18.

First, before starting a audience participation program, a data transmission program is transmitted through a data broadcast from the server apparatus 101 to the client's terminals 102 (step S1701).

Then, the client's terminal 102 starts up the received data transmission program and prepares to receive a control message from the server apparatus 101. The master of ceremonies who navigates a program explains the user, a program audience, a program outline by utilizing video and sound of a broadcasting program content, to pose a quiz (S1702).

Subsequently, the server apparatus 101 transmits a control message containing the information related to the quiz posed to the client's terminal 102 (S1703). In this Embodiment 4, the terminal-input information list describes the data items to be acquired from the client's terminal 102 or its user, and quiz question contents. The control rule describes, in its control message, to pose a first quiz question 1801 and then acquire an answer 1802 to the first quiz question from the user.

The data format of control message is not defined in its detail. The data transmission program can be executed on an arbitrary client' s terminal 102 provided that the client's terminal 102 is not relied upon model dependency in Java language execution environment. Namely, because the data transmission program may be a program particularized for an individual program, the control message format is also satisfactorily defined for each program. It is, of course, possible to employ a standardized control message.

Next, the started-up data transmission program analyzes the received control message to display a quiz question and answer input/selective GUI on the display of the client's terminal 102 (S1704).

The user inputs an answer to the question by the use of an input device, such as a keyboard or mouse, provided on the client' s terminal 102, according to the instruction by the master of ceremonies or display content on the display (step S1705). The data transmission program holds the information inputted by the user and waits for the next control message.

Then, the server apparatus 101, after giving a proper time for the user to input a quiz answer, transmits a new control message containing a correct answer to the first quiz question and data transmission way, to the client's terminal 102 (step S1706).

This control message has a control rule describing the methods for correct/incorrect quiz answer determination, transmission data shaping and data transmission. It is herein assumed that the control rule compares the user's answer held in the data transmission program of the client's terminal 102 with a correct answer of a quiz to transmit only a correct/incorrect answer to the server apparatus 101. Furthermore, the control rule describes also an operation method to calculate a time to be fallen in a predetermined range and properly dispersed to execute data transmission at a calculated time. Specifically, the control rule describes to notify an answer to the first question 1803 so that the client's terminal 102 can make correct/incorrect determination on the first question. Only when the first quiz question is correctly answered, response data is transmitted 1804 to the server apparatus 101.

Then, the client's terminal 102 carries out quiz correct/incorrect determination, generation of transmission data, calculation of a data transmission time and data transmission to the server apparatus 101, according to the received control message (step S1707). Herein, only the client's terminal 102 that the quiz is correctly answered is allowed to transmit response data to the server apparatus 101. Meanwhile, it is assumed that every client's terminal 102 holds a correct/incorrect determination result of the first quiz question.

The server apparatus 101 totalizes the correct/incorrect determination results of the first quiz question transmitted from all the client's terminals 102, and notifies a result thereof to the program navigation administrator and master of ceremonies (step S1708) and further informs the users of the totalized result of quiz correct/incorrect answers through the broadcast (step S1709).

Concerning the second quiz question and the subsequent, the procedure of steps S1702 to S1709 is repeated similarly to the first question. In Fig. 17, the steps S1701 to S1717 correspond to the process of steps S1702 to Step S1709. However, transmitted is a control rule designed such that, in gathering the quiz correct/incorrect determination results, data transmission is allowed for only the client's terminals 102 by which all the quiz questions so far have been correctly answered. In this case, the server apparatus 101 poses a second quiz question 1805 as a control message so that the user who acquired an answer to the second quiz question 1806 is allowed to first transmit.

Receiving a result thereof, the server apparatus 101 transmits a control message to notify 1807 an answer to the second question. The client's terminal 102, in turn, makes correct/incorrect determination on the second question. Transmitted is a control message describing to transmit 1808 response data to the server apparatus 101 only when all the quiz questions have been correctly answered.

By the repetition of posing a quiz question and totalizing correct/incorrect determination results, narrowing-down can be made toward the perfectly answered to the questions. This reduces the number of accesses to the server apparatuses 101 and hence decreased communication load. Due to this, the server apparatus 101 modifies the control message into that for transmission of user information such as name and address in addition to a quiz correct/incorrect determination result. This makes it possible to collect user's detailed information from the client's terminals. Meanwhile, it is possible to pose a quiz question of a free-to-answer type instead of the select-an-answer type and gather the answers (step S1718). In this case, the server apparatus 101 transmits to the client's terminal 102 a control message describing that only the client's terminal 102 correctly answered to all the quiz questions is allowed to transmit 1810 user information 1809 to the server apparatus 101.

Next, only the client's terminal 102 which correctly answered to all the questions transmits response data to the server apparatus 101 (step S1719).

After having posed a series of quiz questions, the names of the perfectly answered are released through the broadcast. Otherwise, video communication is made between the server apparatus 101 and the client's terminal 102 of the perfect answered (step S1720) to air the manner of communication between the both (step S1721).

In this manner, in a audience participation program of digital satellite broadcast, the utilization of a data transmission program and control message make possible to decentralize the time of data transmission from the receiving terminals. Also, the receiving terminals for data transmission can be freely restricted in the number in a manner meeting the progress or situation of a program. This leads to the reduction of the load on data totalizing process of the broadcast-station system and simplification in the data totalizing facility. Accordingly, facilitated is the operation of a audience participation program to be addressed to the broadcast receiving terminals on the order of several tens of hundred units.

## Claims

1. A data transmission program product for a user's terminal (102,202) to execute:
(a) a step of acquiring at least any one of terminal information and user information on the basis of inquiry information,
**characterized in that** it further allows the terminal to execute:
(b) a step of calculating a transmitting condition for a transmission from the user terminal (102,202) to a designated information processing apparatus (101,201) on the basis of a transmission rule (1305); and
(c) a step of instructing to transmit the acquired information to the designated information processing apparatus (101,201) under the transmitting condition.

2. A data transmission program product according to claim 1, wherein the transmission rule includes a further step to calculate a transmission time (Ts) within a predetermined time range which is decentralized irregularly by using the acquired information.

3. A data transmission program product according to claim 2, wherein the transmission rule includes a further step to determine allowing/not-allowing transmission on the basis of at least any of terminal identifying information, the terminal information and the user information.

4. A data transmission program product according to any of claims 1 to 3, further executing a step of updating the inquiry information and transmission rule already held into a new inquiry information and transmission rule.

5. A data transmission program product according to any of claims 1 to 4, wherein the inquiry information includes a further step of displaying ticket information and reservation input form.

6. A program product for a computer (101) to execute:
(a) a step of transmitting a data transmission program according to any of claims 1 to 4 to an information processing apparatus (102), said information processing apparatus (102) being a terminal of a user;
(b) a step of receiving response data from the information processing apparatus (102) having executed said data transmission program;
(c) a step of updating control information including inquiry information and a transmission rule on the basis of the response data; and
(d) a step of transmitting the control information to the information processing apparatus (102).

7. A program product according to claim 6, for the computer (101) to further execute a step of setting terminal (102) identifying information onto the control information.

8. A program product for a user's terminal (102) to execute:
(a) a step of receiving a data transmission program according to any of claims 1 to 4;
(b) a step of starting up the data transmission program;
(c) a step of receiving control information including inquiry information and a transmission rule; and
(d) a step of transmitting information acquired by executing the data transmission program according to an instruction of the program.

9. A program product according to claim 8, for the terminal (102) to further execute a step of requesting the data transmission program under execution to update the control information.

10. A recording medium to be read by a computer, recording a data transmission program according to any of claims 1 to 4.

11. A recording medium to be read by a computer, recording a program according to any of claims 6 to 9.

12. An information processing apparatus (101)
**characterized in that** it comprises:
(a) a storage section (307) storing
(a1) control information including inquiry information and transmission rule, and
(a2) the data transmission program according to claim 1 to be executed on a terminal (102) of a user;
(b) a transmitting section (304) for transmitting the data transmission program and the control information to the terminal (102);
(c) a receiving section (305) for receiving response data from the terminal (102) having executed the data transmission program; and
(d) a control information setting section (308) for updating the control information on the basis of the response data.

13. An information processing apparatus according to claim 12, wherein the transmission rule includes a further step to calculate a transmission time (Ts) within a predetermined time range which is decentralized irregularly by using the acquired information.

14. An information processing apparatus according to claim 13, wherein the transmission rule includes a further step to determine allowing/not-allowing transmission on the basis of at least any of terminal identifying information, the terminal information and the user information.

15. An information processing apparatus according to any of claims 12 to 14, wherein the data transmission program to be executed further includes a step of updating the inquiry information and transmission rule already held into a new inquiry information and transmission rule.

16. An information processing apparatus according to any of claims 12 to 15, further comprising an identifier setting section to set terminal identifying information onto the control information for each information processing apparatus requesting to transmit the data transmission program.

17. An information processing apparatus (102) of a user **characterized in that** it comprises:
(a) a module receiving section (405) for receiving the data transmission program according to claim 1 to be executed on said information processing apparatus (102);
(b) an executing section (407) for executing the data transmission program; and
(c) a transmitting section (402) for transmitting information acquired by executing the data transmission program according to an instruction from the data transmission program.

18. An information processing apparatus according to claim 17, wherein the transmission rule includes a further step to calculate a transmission time (Ts) within a predetermined time range which is decentralized irregularly by using the acquired information.

19. An information processing apparatus according to claim 18, wherein the transmission rule includes a further step to determine allowing/not-allowing transmission on the basis of at least any of terminal identifying information, the terminal information and the user information.

20. An information processing apparatus according to any of claims 17 to 19, wherein the data transmission program to be executed further includes a step of updating the inquiry information and transmission rule already held into a new inquiry information and transmission rule.

21. An information processing apparatus according to any of claims 17 to 20, further comprising:
(a) a control information receiving section for receiving control information including inquiry information and a transmission rule, and
(b) an updating section for updating, into the control information, control information to which the data transmission program makes reference.

22. An information processing apparatus (101) **characterized in that** it comprises:
(a) a module transmitting section (304) for transmitting a data transmission program according to claim 1 to a user's terminal (102) according to claim 17, to be executed on said terminal (102),
wherein the inquiry information is a method of displaying ticket information and reservation input form;
(b) a circuit connecting section for connecting, where received reservation information is not acceptable, a telephone line to an information processing apparatus as a transmission source of the reservation information;
(c) an instruction accepting section for accepting an instruction from the telephone line; and
(d) a reservation changing section for changing the reservation information by the instruction.

23. An information processing apparatus (101) according to claim 22, wherein the transmission rule includes a further step to calculate a transmission time (Ts) within a predetermined time range which is decentralized irregularly by using the acquired information.

24. An information processing apparatus (101) according to claim 23, wherein the transmission rule includes a further step to determine allowing/not-allowing transmission on the basis of at least any of terminal (102) identifying information, the terminal information and the user information.

25. An information processing apparatus according to any of claims 22 to 24, wherein the data transmission program to be executed further includes a step of updating the inquiry information and transmission rule already held into a new inquiry information and transmission rule.

26. A two-way communicating system **characterized in that** it comprises a first information processing apparatus (101) according to any of claims 12 to 16 and a second information processing apparatus (102) according to any of claims 17 to 21, wherein said first information processing apparatus (101) manages information contents and provides/distributes contents and data transmission program product according to claim 1 to said second information processing apparatus (102).

27. A two-way communicating method **characterized in that** it comprises:
(a) a step of distributing a data transmission program according to any of claims 1 to 4 to a broadcast receiving terminal (202) by a broadcast station (201) capable of broadcasting data;
(b) a message transmitting step of subsequently transmitting control information including inquiry information and a transmission rule to the broadcast receiving terminal (202) by the broadcast station (201) through a data broadcast; and
(c) a step of transmitting response data as information the broadcast receiving terminal (202) have acquired on the basis of the control information, according to the data transmission program and the control information.

28. A two-way communicating method according to claim 27, further comprising:
a step of analyzing the response data by the broadcast station (201), and
a step of carrying out two-way communication real-time with only the broadcast receiving terminal (202) which information obtained by the analysis satisfies a predetermined condition.

29. A two-way communicating method according to claim 27, wherein the data broadcast is a viewer participation quiz program, the message transmitting step comprising
(a) a first message transmitting step of transmitting control information instructing a viewer to input a quiz answer,
(b) a second message transmitting step of transmitting control information including a correct answer to a quiz questioned immediately before and instructing to notify a response only where a predetermined condition is satisfied, and
(c) a totalizing step of totalizing the number of the broadcast receiving terminals having transmitted the response data.

30. A two-way communicating method according to claim 29, comprising:
a step of repeating at least once or more the first message transmitting step, the second message transmitting step and the totalizing step, and
a third message transmitting step of transmitting control information instructing the broadcast receiving terminal to transmit response data only when received quizzes are correctly answered a predetermined number or more where the broadcast terminals are a predetermined number or less.

## Patentansprüche

1. Datenübertragungs-Programmprodukt zum Ausführen durch ein Nutzer-Endgerät (102, 202):
(a) eines Schritts des Erfassens von wenigstens irgendeiner Endgerät-Informationen und/oder Nutzerinformation aufgrund von Abfrage-Informationen,
**dadurch gekennzeichnet, dass** es das Endgerät weiterhin ausführen lässt:
(b) einen Schritt des Berechnens einer Übertragungsbedingung für das Senden von dem Nutzer-Endgerät (102, 202) an eine festgelegte Informationsverarbeitungsvorrichtung (101, 201) aufgrund einer Übertragungsregel (1305) und
(c) einen Schritt des Befehlens, die erfassten Informationen an die festgelegte Informationsverarbeitungsvorrichtung (101, 201) entsprechend der Übertragungsbedingung zu senden.

2. Datenübertragungs-Programmprodukt nach Anspruch 1, **dadurch gekennzeichnet, dass** die Übertragungsregel einen weiteren Schritt zum Berechnen einer Übertragungszeit (Ts) in einem vorgegebenen Zeitbereich beinhaltet, die unter Verwendung der erfassten Informationen unregelmäßig dezentralisiert wird.

3. Datenübertragungs-Programmprodukt nach Anspruch 2, **dadurch gekennzeichnet, dass** die Übertragungsregel einen weiteren Schritt zum Festlegen des Zulassens/Nichtzulassens einer Übertragung aufgrund von Endgerät-Identifikationsinformationen, der Endgerät-Informationen und/oder der Nutzerinformationen beinhaltet.

4. Datenübertragungs-Programmprodukt nach einem der Ansprüche 1 bis 3, das weiterhin einen Schritt des Aktualisierens der Abfrage-Informationen und der Übertragungsregel, die bereits gehalten werden, zu neuen Abfrage-Informationen und zu einer neuen Übertragungsregel ausführt.

5. Datenübertragungs-Programmprodukt nach einem der Ansprüche 1 bis 4, **dadurch gekennzeichnet, dass** die Abfrage-Informationen einen weiteren Schritt des Anzeigens von Ticket-Informationen und eines Reservierungseingabeformulars aufweisen.

6. Programmprodukt zum Ausführen der folgenden Schritte durch einen Computer (101):
(a) eines Schritts des Sendens eines Datenübertragungsprogramms nach einem der Ansprüche 1 bis 4 an eine Informationsverarbeitungsvorrichtung (102), wobei die Informationsverarbeitungsvorrichtung (102) ein Endgerät eines Nutzers ist;
(b) eines Schritts des Empfangenes von Antwortdaten von der Informationsverarbeitungsvorrichtung (102), die das Datenübertragungsprogramm abgearbeitet hat;
(c) eines Schritts des Aktualisierens von Steuerinformationen, die Abfrage-Informationen und eine Übertragungsregel umfassen, aufgrund der Antwortdaten; und
(d) eines Schritts des Sendens der Steuerinformationen an die Informationsverarbeitungsvorrichtung (102).

7. Programmprodukt nach Anspruch 6 zum weiteren Ausführen eines Schritts des Einstellens von Endgerät(102)-Identifikationsinformationen auf die Steuerinformationen durch den Computer (101).

8. Programmprodukt zum Ausführen der folgenden Schritte durch ein Nutzer-Endgerät (102):
(a) eines Schritts des Empfangens eines Datenübertragungsprogramms nach einem der Ansprüche 1 bis 4;
(b) eines Schritts des Startens des Datenübertragungsprogramms;
(c) eines Schritts des Empfangens von Steuerinformationen, die Abfrage-Informationen und eine Übertragungsregel umfassen; und
(d) eines Schritts des Übertragens von Informationen, die durch Abarbeiten des Datenübertragungsprogramms erfasst werden, entsprechend einem Befehl des Programms.

9. Programmprodukt nach Anspruch 8 zum weiteren Ausführen, durch das Endgerät (102), eines Schritts des Aufforderns des Datenübertragungsprogramms, das gerade abgearbeitet wird, die Steuerinformationen zu aktualisieren.

10. Aufzeichnungsmedium zum Lesen durch einen Computer, das ein Datenübertragungsprogramm nach einem der Ansprüche 1 bis 4 aufzeichnet.

11. Aufzeichnungsmedium zum Lesen durch einen Computer, das ein Programm nach einem der Ansprüche 6 bis 9 aufzeichnet.

12. Informationsverarbeitungsvorrichtung (101), **dadurch gekennzeichnet, dass** sie Folgendes aufweist:
(a) einen Speicherteil (307), der Folgendes speichert:
(a1) Steuerinformationen, die Abfrage-Informationen und eine Übertragungsregel umfassen; und
(a2) das Datenübertragungsprogramm nach Anspruch 1, das in einem Endgerät (102) eines Nutzers abgearbeitet werden soll;
(b) einen Sendeteil (304) zum Senden des Datenübertragungsprogramms und der Steuerinformationen an das Endgerät (102);
(c) einen Empfangsteil (305) zum Empfangen von Antwortdaten von dem Endgerät (102), das das Datenübertragungsprogramm abgearbeitet hat; und
(d) einen Steuerinformationen-Einstellteil (308) zum Aktualisieren der Steuerinformationen aufgrund der Antwortdaten.

13. Informationsverarbeitungsvorrichtung nach Anspruch 12, **dadurch gekennzeichnet, dass** die Übertragungsregel einen weiteren Schritt zum Berechnen einer Übertragungszeit (Ts) in einem vorgegebenen Zeitbereich beinhaltet, die unter Verwendung der erfassten Informationen unregelmäßig dezentralisiert wird.

14. Informationsverarbeitungsvorrichtung nach Anspruch 13, **dadurch gekennzeichnet, dass** die Übertragungsregel einen weiteren Schritt zum Festlegen des Zulassens/Nichtzulassens einer Übertragung aufgrund von Endgerät-Identifikationsinformationen, der Endgerät-Informationen und/oder der Nutzerinformationen beinhaltet.

15. Informationsverarbeitungsvorrichtung nach einem der Ansprüche 12 bis 14, **dadurch gekennzeichnet, dass** das abzuarbeitende Datenübertragungsprogramm weiterhin einen Schritt des Aktualisierens der Abfrage-Informationen und der Übertragungsregel, die bereits gehalten werden, zu neuen Abfrage-Informationen und zu einer neuen Übertragungsregel aufweist.

16. Informationsverarbeitungsvorrichtung nach einem der Ansprüche 12 bis 15, die weiterhin einen Identifikator-Einstellteil zum Einstellen von Endgerät-Identifikationsinformationen auf die Steuerinformationen für jede Informationsverarbeitungsvorrichtung aufweist, die die Übertragung des Datenübertragungsprogramms anfordert.

17. Informationsverarbeitungsvorrichtung (102) eines Nutzers, **dadurch gekennzeichnet, dass** sie Folgendes aufweist:
(a) einen Modulempfangsteil (405) zum Empfangen des Datenübertragungsprogramms nach Anspruch 1, das in der Informationsverarbeitungsvorrichtung (102) abgearbeitet werden soll;
(b) einen Abarbeitungsteil (407) zum Abarbeiten des Datenübertragungsprogramms und
(c) einen Sendeteil (402) zum Senden von Informationen, die durch Abarbeiten des Datenübertragungsprogramms erfasst werden, entsprechend einem Befehl von dem Datenübertragungsprogramm.

18. Informationsverarbeitungsvorrichtung nach Anspruch 17, **dadurch gekennzeichnet, dass** die Übertragungsregel einen weiteren Schritt zum Berechnen einer Übertragungszeit (Ts) in einem vorgegebenen Zeitbereich beinhaltet, die unter Verwendung der erfassten Informationen unregelmäßig dezentralisiert wird.

19. Informationsverarbeitungsvorrichtung nach Anspruch 18, **dadurch gekennzeichnet, dass** die Übertragungsregel einen weiteren Schritt zum Festlegen des Zulassens/Nichtzulassens einer Übertragung aufgrund von Endgerät-Identifikationsinformationen, der Endgerät-Informationen und/oder der Nutzerinformationen beinhaltet.

20. Informationsverarbeitungsvorrichtung nach einem der Ansprüche 17 bis 19, **dadurch gekennzeichnet, dass** das abzuarbeitende Datenübertragungsprogramm weiterhin einen Schritt des Aktualisierens der Abfrage-Informationen und der Übertragungsregel, die bereits gehalten werden, zu neuen Abfrage-Informationen und zu einer neuen Übertragungsregel aufweist.

21. Informationsverarbeitungsvorrichtung nach einem der Ansprüche 17 bis 20, die weiterhin Folgendes aufweist:
(a) einen Steuerinformationen-Empfangsteil zum Empfangen von Steuerinformationen, die Abfrage-Informationen und eine Übertragungsregel umfassen; und
(b) einen Aktualisierungsteil zum Aktualisieren von Steuerinformationen, die das Datenübertragungsprogramm referenziert, zu den Steuerinformationen.

22. Informationsverarbeitungsvorrichtung (101), **dadurch gekennzeichnet, dass** sie Folgendes aufweist:
(a) einen Modulsendeteil (304) zum Senden eines Datenübertragungsprogramms nach Anspruch 1 an ein Nutzer-Endgerät (102) nach Anspruch 17, das in dem Endgerät (102) abgearbeitet werden soll, wobei die Abfrage-Informationen ein Verfahren zum Anzeigen von Ticket-Informationen und eines Reservierungseingabeformulars sind;
(b) einen Schaltverbindungsteil zum Verbinden, wenn empfangene Reservierungsinformationen nicht annehmbar sind, einer Telefonleitung mit einer Informationsverarbeitungsvorrichtung als Sendequelle für die Reservierungsinformationen;
(c) einen Befehlsannahmeteil zum Annehmen eines Befehls von der Telefonleitung und
(d) einen Reservierungsänderungsteil zum Ändern der Reservierungsinformationen mit dem Befehl.

23. Informationsverarbeitungsvorrichtung (101) nach Anspruch 22, **dadurch gekennzeichnet, dass** die Übertragungsregel einen weiteren Schritt zum Berechnen einer Übertragungszeit (Ts) in einem vorgegebenen Zeitbereich beinhaltet, die unter Verwendung der erfassten Informationen unregelmäßig dezentralisiert wird.

24. Informationsverarbeitungsvorrichtung (101) nach Anspruch 23, **dadurch gekennzeichnet, dass** die Übertragungsregel einen weiteren Schritt zum Festlegen des Zulassens/Nichtzulassens einer Übertragung aufgrund von Endgerät(102)-Identifikationsinformationen, der Endgerät-Informationen und/oder der Nutzerinformationen beinhaltet.

25. Informationsverarbeitungsvorrichtung nach einem der Ansprüche 22 bis 24, **dadurch gekennzeichnet, dass** das abzuarbeitende Datenübertragungsprogramm weiterhin einen Schritt des Aktualisierens der Abfrage-Informationen und der Übertragungsregel, die bereits gehalten werden, zu neuen Abfrage-Informationen und zu einer neuen Übertragungsregel aufweist.

26. Zweiwegkommunikationssystem, **dadurch gekennzeichnet, dass** es eine erste Informationsverarbeitungsvorrichtung (101) nach einem der Ansprüche 12 bis 16 und eine zweite Informationsverarbeitungsvorrichtung (102) nach einem der Ansprüche 17 bis 21 aufweist, wobei die erste Informationsverarbeitungsvorrichtung (101) Informationsinhalte verwaltet und Inhalte und ein Datenübertragungs-Programmprodukt nach Anspruch 1 für/an die zweite Informationsverarbeitungsvorrichtung (102) bereitstellt/verteilt.

27. Zweiwegkommunikationsverfahren, **dadurch gekennzeichnet, dass** es Folgendes aufweist:
(a) einen Schritt des Verteilens eines Datenübertragungsprogramms nach einem der Ansprüche 1 bis 4 an ein Rundfunkempfangsgerät (202) mittels einer Rundfunkstation (201), die Daten durch Rundfunk übertragen kann;
(b) einen Nachrichtensendeschritt des nachfolgenden Sendens von Steuerinformationen, die Abfrage-Informationen und eine Übertragungsregel umfassen, an das Rundfunkempfangsgerät (202) mittels der Rundfunkstation (201) durch eine Daten-Rundfunkübertragung; und
(c) einen Schritt des Sendens von Antwortdaten als Informationen, die das Rundfunkempfangsgerät (202) aufgrund der Steuerinformationen erfasst hat, entsprechend dem Datenübertragungsprogramm und den Steuerinformationen.

28. Zweiwegkommunikationsverfahren nach Anspruch 27, das weiterhin Folgendes aufweist:
einen Schritt des Analysierens der Antwortdaten durch die Rundfunkstation (201) und
einen Schritt des Durchführens einer Zweiwegkommunikation in Echtzeit nur mit dem Rundfunkempfangsgerät (202), wobei Informationen, die durch die Analyse erhalten werden, eine vorgegebene Bedingung erfüllen.

29. Zweiwegkommunikationsverfahren nach Anspruch 27, **dadurch gekennzeichnet, dass** die Daten-Rundfunkübertragung eine Quizsendung mit Zuschauerbeteiligung ist, wobei der Nachrichtensendeschritt Folgendes umfasst:
(a) einen ersten Nachrichtensendeschritt des Sendens von Steuerinformationen, die einen Zuschauer anweisen, eine Quiz-Antwort einzugeben;
(b) einen zweiten Nachrichtensendeschritt des Sendens von Steuerinformationen, die eine richtige Antwort auf eine unmittelbar zuvor gestellt Quizfrage enthalten und anweisen, eine Antwort nur dann mitzuteilen, wenn eine vorgegebene Bedingung erfüllt ist; und
(c) einen Zusammenzählschritt des Zusammenzählens der Anzahl der Rundfunkempfangsgeräte, die die Antwortdaten gesendet haben.

30. Zweiwegkommunikationsverfahren nach Anspruch 29, das Folgendes aufweist:
einen Schritt des mindestens einmaligen oder mehrmaligen Wiederholens des ersten Nachrichtensendeschritts, des zweiten Nachrichtensendeschritts und des Zusammenzählschritts und
einen dritten Nachrichtensendeschritt des Sendens von Steuerinformationen, die dem Rundfunkempfangsgerät befehlen, Antwortdaten nur dann zu senden, wenn empfangene Quizfragen in einer vorgegebenen oder größeren Anzahl richtig beantwortet werden, wobei die Rundfunkgeräte eine vorgegebene Anzahl oder weniger sind.

## Revendications

1. Produit de programme de transmission de données pour un terminal d'utilisateur (102, 202) destiné à exécuter :
(a) une étape consistant à acquérir au moins des informations quelconques parmi des informations de terminal et des informations d'utilisateur sur la base d'informations d'interrogation,
**caractérisé en ce qu'**il permet en outre au terminal d'exécuter :
(b) une étape consistant à calculer une condition de transmission pour une transmission du terminal d'utilisateur (102, 202) à un dispositif de traitement d'informations désigné (101, 201) sur la base d'une règle de transmission (1305), et
(c) une étape consistant à ordonner de transmettre les informations acquises au dispositif de traitement d'informations désigné (101, 201) dans les conditions de transmission.

2. Produit de programme de transmission de données selon la revendication 1, dans lequel la règle de transmission comprend une étape supplémentaire consistant à calculer un temps de transmission (Ts) à l'intérieur d'une plage de temps prédéterminée qui est décentrée de manière irrégulière en utilisant les informations acquises.

3. Produit de programme de transmission de données selon la revendication 2, dans lequel la règle de transmission comprend une étape supplémentaire pour déterminer l'autorisation/la non-autorisation de la transmission sur la base d'au moins des informations quelconques parmi des informations identifiant un terminal, les informations de terminal et les informations d'utilisateur.

4. Produit de programme de transmission de données selon l'une quelconque des revendications 1 à 3, exécutant en outre une étape consistant à mettre à jour les informations d'interrogation et la règle de transmission déjà détenues en de nouvelles informations d'interrogation et une nouvelle règle de transmission.

5. Produit de programme de transmission de données selon l'une quelconque des revendications 1 à 4, dans lequel les informations d'interrogation comprennent une étape supplémentaire consistant à afficher des informations de ticket et un formulaire d'entrée de réservation.

6. Produit de programme pour un ordinateur (101) destiné à exécuter :
(a) une étape consistant à transmettre un programme de transmission de données selon l'une quelconque des revendications 1 à 4 à un dispositif de traitement d'informations (102), ledit dispositif de traitement d'informations (102) étant un terminal d'un utilisateur,
(b) une étape consistant à recevoir des données de réponse du dispositif de traitement d'informations (102) ayant exécuté ledit programme de transmission de données,
(c) une étape consistant à mettre à jour des informations de commande comprenant des informations d'interrogation et une règle de transmission sur la base des données de réponse, et
(d) une étape consistant à transmettre les informations de commande au dispositif de traitement d'informations (102).

7. Produit de programme selon la revendication 6, destiné à amener l'ordinateur (101) à exécuter en outre une étape consistant à établir les informations identifiant un terminal (102) sur les informations de commande.

8. Produit de programme pour un terminal d'utilisateur (102) destiné à exécuter :
(a) une étape consistant à recevoir un programme de transmission de données selon l'une quelconque des revendications 1 à 4,
(b) une étape consistant à lancer le programme de transmission de données,
(c) une étape consistant à recevoir des informations de commande comprenant des informations d'interrogation et une règle de transmission, et
(d) une étape consistant à transmettre des informations acquises en exécutant le programme de transmission de données selon une instruction du programme.

9. Produit de programme selon la revendication 8, destiné à amener le terminal (102) à exécuter en outre une étape consistant à demander au programme de transmission de données en exécution de mettre à jour les informations de commande.

10. Support d'enregistrement devant être lu par un ordinateur, enregistrant un programme de transmission de données selon l'une quelconque des revendications 1 à 4.

11. Support d'enregistrement devant être lu par un ordinateur, enregistrant un programme selon l'une quelconque des revendications 6 à 9.

12. Dispositif de traitement d'informations (101), **caractérisé en ce qu'**il comprend :
(a) une section de mémorisation (307) mémorisant
(a1) des informations de commande comprenant des informations d'interrogation et une règle de transmission, et
(a2) le programme de transmission de données selon la revendication 1 devant être exécuté sur un terminal (102) d'un utilisateur,
(b) une section d'émission (304) destinée à émettre le programme de transmission de données et les informations de commande vers le terminal (102),
(c) une section de réception (305) destinée à recevoir des données de réponse du terminal (102) ayant exécuté le programme de transmission de données, et
(d) une section d'établissement d'informations de commande (308) destinée à mettre à jour les informations de commande sur la base des données de réponse.

13. Dispositif de traitement d'informations selon la revendication 12, dans lequel la règle de transmission comprend une étape supplémentaire pour calculer un temps de transmission (Ts) à l'intérieur d'une plage de temps prédéterminée qui est décentrée de manière irrégulière en utilisant les informations acquises.

14. Dispositif de traitement d'informations selon la revendication 13, dans lequel la règle de transmission comprend une étape supplémentaire consistant à déterminer l'autorisation/la non-autorisation de la transmission sur la base d'au moins des informations quelconques parmi des informations identifiant un terminal, les informations de terminal et les informations d'utilisateur.

15. Dispositif de traitement d'informations selon l'une quelconque des revendications 12 à 14, dans lequel le programme de transmission de données devant être exécuté comprend en outre une étape consistant à mettre à jour les informations d'interrogation et une règle de transmission déjà détenues en de nouvelles informations d'interrogation et une nouvelle règle de transmission.

16. Dispositif de traitement d'informations selon l'une quelconque des revendications 12 à 15, comprenant en outre une section d'établissement d'identificateur destinée à établir des informations identifiant un terminal sur les informations de commande pour chaque dispositif de traitement d'informations demandant à transmettre le programme de transmission de données.

17. Dispositif de traitement d'informations (102) d'un utilisateur **caractérisé en ce qu'**il comprend :
(a) une section de réception de module (405) destinée à recevoir le programme de données selon la revendication 1 devant être exécuté sur ledit dispositif de traitement d'informations (102),
(b) une section d'exécution (407) destinée à exécuter le programme de transmission de données, et
(c) une section d'émission (402) destinée à émettre les informations acquises en exécutant le programme de transmission de données conformément à une instruction provenant du programme de transmission de données.

18. Dispositif de traitement d'informations selon la revendication 17, dans lequel la règle de transmission comprend une étape supplémentaire pour calculer un temps de transmission (Ts) à l'intérieur d'une plage de temps prédéterminée qui est décentrée de manière irrégulière en utilisant les informations acquises.

19. Dispositif de traitement d'informations selon la revendication 18, dans lequel la règle de transmission comprend une étape supplémentaire consistant à déterminer l'autorisation/la non-autorisation de la transmission sur la base d'au moins des informations quelconques parmi les informations identifiant un terminal, les informations de terminal et les informations d'utilisateur.

20. Dispositif de traitement d'informations selon l'une quelconque des revendications 17 à 19, dans lequel le programme de transmission de données devant être exécuté comprend en outre une étape consistant à mettre à jour les informations d'interrogation et la règle de transmission déjà détenues en de nouvelles informations d'interrogation et une nouvelle règle de transmission.

21. Dispositif de traitement d'informations selon l'une quelconque des revendications 17 à 20, comprenant en outre :
(a) une section de réception d'informations de commande destinée à recevoir des informations de commande comprenant des informations d'interrogation et une règle de transmission, et
(b) une section de mise à jour destinée à mettre à jour, dans les informations de commande, des informations de commande auxquelles le programme de transmission de données fait référence.

22. Dispositif de traitement d'informations (101) **caractérisé en ce qu'**il comprend :
(a) une section d'émission de module (304) destinée à émettre un programme de transmission de données selon la revendication 1 à un terminal d'utilisateur (102) selon la revendication 17, devant être exécuté sur ledit terminal (102),
dans lequel les informations d'interrogation consistent en un procédé d'affichage d'informations de ticket et de formulaire d'entrée de réservation,
(b) une section de connexion de circuit destinée à connecter, lorsque les informations de réservation reçues ne sont pas acceptables, une ligne téléphonique à un dispositif de traitement d'informations en tant que source de transmission des informations de réservation,
(c) une section d'acceptation d'instruction destinée à accepter une instruction provenant de la ligne téléphonique, et
(d) une section de modification de réservation destinée à modifier les informations de réservation par le biais de l'instruction.

23. Dispositif de traitement d'informations (101) selon la revendication 22, dans lequel la règle de transmission comprend une étape supplémentaire consistant à calculer un temps de transmission (Ts) à l'intérieur d'une plage de temps prédéterminée qui est décentrée de manière irrégulière en utilisant les informations acquises.

24. Dispositif de traitement d'informations (101) selon la revendication 23, dans lequel la règle de transmission comprend une étape supplémentaire pour déterminer l'autorisation/la non-autorisation de la transmission sur la base d'au moins des informations quelconques parmi des informations identifiant un terminal (102), les informations de terminal et les informations d'utilisateur.

25. Dispositif de traitement d'informations selon l'une quelconque des revendications 22 à 24, dans lequel le programme de transmission de données devant être exécuté comprend en outre une étape consistant à mettre à jour les informations d'interrogation et la règle de transmission déjà détenues en de nouvelles informations d'interrogation une nouvelle règle de transmission.

26. Système de communication bidirectionnel **caractérisé en ce qu'**il comprend un premier dispositif de traitement d'informations (101) selon l'une quelconque des revendications 12 à 16 et un second dispositif de traitement d'informations (102) selon l'une quelconque des revendications 17 à 21, dans lequel ledit premier dispositif de traitement d'informations (101) gère les contenus d'informations et fournit/distribue des contenus et un produit de programme de transmission de données selon la revendication 1 audit second dispositif de traitement d'informations (102).

27. Procédé de communication bidirectionnel **caractérisé en ce qu'**il comprend :
(a) une étape consistant à distribuer un programme de transmission de données selon l'une quelconque des revendications 1 à 4 à un terminal de réception de diffusion (202) par le biais d'une station de diffusion (201) capable de diffuser des données,
(b) une étape de transmission de message consistant à transmettre ensuite des informations de commande comprenant des informations d'interrogation et une règle de transmission au terminal de réception de diffusion (202) par le biais de la station de diffusion (201) par l'intermédiaire d'une diffusion de données, et
(c) une étape consistant à transmettre des données de réponse en tant qu'informations que le terminal de réception de diffusion (202) a acquises sur la base d'informations de commande, conformément au programme de transmission de données et aux informations de commande.

28. Procédé de communication bidirectionnel selon la revendication 27, comprenant en outre :
une étape consistant à analyser les données de réponse par le biais de la station de diffusion (201), et
une étape consistant à réaliser une communication bidirectionnelle en temps réel seulement avec le terminal de réception de diffusion (202) dont les informations obtenues par l'analyse satisfont une condition prédéterminée.

29. Procédé de communication bidirectionnel selon la revendication 27, dans lequel la diffusion de données est un programme de questionnaire de participation d'observateur, l'étape de transmission de message comprenant :
(a) une première étape de transmission de message destinée à transmettre les informations de commande donnant pour instruction à un observateur d'entrer une réponse de questionnaire,
(b) une seconde étape de transmission de message consistant à transmettre des informations de commande comprenant une réponse correcte à un questionnaire soumis immédiatement avant et donnant pour instruction de notifier une réponse seulement lorsqu'une condition prédéterminée est satisfaite, et
(c) une étape de totalisation consistant à totaliser le nombre de terminaux de réception de diffusion ayant transmis les données de réponse.

30. Procédé de communication bidirectionnel selon la revendication 29, comprenant :
une étape consistant à répéter au moins une fois ou plus la première étape de transmission de message, la seconde étape de transmission de message et l'étape de totalisation, et
une troisième étape de transmission de message consistant à transmettre des informations de commande donnant pour instruction au terminal de réception de diffusion de transmettre des données de réponse seulement lorsque les questionnaires reçus font l'objet d'une réponse correcte avec un nombre prédéterminé ou plus lorsque les terminaux de diffusion sont en un nombre prédéterminé ou moins.
